# EUROPEAN PATENT SPECIFICATION

(11) **EP 4 161 189 B1**
(45) Date of publication and mention of the grant of the patent: **09.12.2026**
(21) Application number: 21813304.9
(22) Date of filing: 29.05.2021
(51) Int. Cl.: H04B 7/06, H04L 1/00, H04L 1/06

(54) **METHOD AND DEVICE FOR SENDING/RECEIVING NULL DATA PACKET ANNOUNCEMENT FRAME**
VERFAHREN UND VORRICHTUNG ZUM SENDEN/EMPFANGEN EINES NULLDATENPAKETANSAGERAHMENS
PROCÉDÉ ET DISPOSITIF D'ENVOI/DE RÉCEPTION D'UNE TRAME D'ANNONCE DE PAQUET DE DONNÉES NULLES

(30) Priority: 29.05.2020 CN 202010478472
(43) Date of publication of application: 05.04.2023
(73) Proprietor: HUAWEI TECHNOLOGIES CO., LTD., Shenzhen, Guangdong 518129 (CN)
(72) Inventor: LIU, Chenchen, Shenzhen, Guangdong 518129 (CN); YU, Jian, Shenzhen, Guangdong 518129 (CN); LIANG, Dandan, Shenzhen, Guangdong 518129 (CN); ZHANG, Meihong, Shenzhen, Guangdong 518129 (CN); GAN, Ming, Shenzhen, Guangdong 518129 (CN)
(74) Representative: Epping - Hermann - Fischer
(86) International application number: PCT/CN2021/097043
(87) International publication number: WO 2021/239143

(56) References cited:
- WO-A1-2017/030297
- WO-A1-2020/094098
- CN-A- 109 412 772
- CN-A- 111 162 825
- US-A1- 2019 261 369
- US-A1- 2019 261 369
- US-B2- 10 111 132
- LIU CHENCHEN: "EHT NDPA Frame Design Discussion IEEE 802.11-20/1015r5", IEEE DRAFT; 11-20-1015-05-00BE-EHT-NDPA-FRAME-DESIGN-DISCUSSION, 10 November 2020 (2020-11-10), Piscataway, NJ USA , XP068175061

## Description

### TECHNICAL FIELD

This application relates to the field of communication technologies, and in particular, to a method and an apparatus for sending/receiving a null data packet announcement (null data packet announcement, NDPA) frame in a wireless local area network (wireless local area network, WLAN).

### BACKGROUND

In a wireless system such as a WLAN, an access point (access point, AP) needs to obtain channel state information (channel state information, CSI) for beamforming (beamforming, BF), rate control, resource allocation, and the like. In a WLAN, a process of obtaining channel state information is referred to as channel sounding.

In an 802.11ac (also referred to as very high throughput (very high throughput, VHT)) channel sounding process, an AP (used as a channel sounding initiator, referred to as a beamformer, BFer for short) sends an NDPA frame to notify, of a related channel sounding parameter, a STA (used as a channel sounding responder, referred to as a beamformee, BFee for short) that needs to perform channel sounding. In the VHT standard phase, only one type of NDPA frame exists. Therefore, a VHT STA does not need to distinguish the type of the NDPA frame.

Further, in the 802.11ax (also referred to as high efficiency (high efficiency, HE)) standard phase, compared with a VHT NDPA frame, an HE NDPA frame differs in that a station information field is extended to 4 bytes, and an HE indication is introduced into a second bit of a 1-byte sounding dialog token (sounding dialog token) of the NDPA frame to indicate whether the NDPA frame is an HE NDPA frame or a VHT NDPA frame.

However, introduction of a larger bandwidth (such as 240 MHz and 320 MHz) and a larger number of spatial streams (such as 9 to 16 spatial streams) is considered in the 802.11be (also referred to as extremely high throughput (extremely high throughput, EHT)) standard. Currently, no design solution of an EHT NDPA frame is proposed to support channel sounding on a larger bandwidth and a larger number of streams or to allow a STA to distinguish between different NDPA frame variants.

WO 2020/094098 Al describes a channel state information feedback method including sending a NDPA frame by a beamformer and receiving a beamforming report sent by a beamformee. The sounding dialog token in the NDPA frame includes an NDPA type, indicating that NDPA frame is a VHT NDPA frame, an HE NDPA frame, a positioning (ranging) NDPA frame, or an EHT NDPA frame.

WO 2017/030297 A1 describes a method for uplink multi-user transmission of channel state information, and proposes an HE format of various frames including an NDPA frame, an NDP frame and a trigger frame used in a channel state information acquisition procedure.

### SUMMARY

This application provides a method and an apparatus for sending/receiving a null data packet announcement frame, to allow a STA to accurately determine an EHT NDPA frame.

The invention relates to claim 1 (method relating to a transmitting communication apparatus/station sending an NDPA frame), claim 2 (method relating to a receiving EHT/HE station receiving the NDPA frame), claim 13 (apparatus relating to the transmitting communication apparatus/station) and claim 14 (apparatus relating to the receiving EHT/HE station). The additional features are disclosed in their dependant claims.

### BRIEF DESCRIPTION OF DRAWINGS

FIG. 1 is a schematic diagram of a channel sounding process in the 802.11ac;
FIG. 2 is a schematic diagram of a structure of a VHT NDPA frame;
FIG. 3 is a schematic diagram of channel state information of single-user feedback in the 802.11ax;
FIG. 4 is a schematic diagram of channel state information of multi-user feedback in the 802.11ax;
FIG. 5 is a schematic diagram of a structure of an HE NDPA frame;
FIG. 6 is a schematic diagram of a structure of a sounding dialog token field in an NDPA frame;
FIG. 7 is a schematic diagram of avoiding that a VHT STA misreads an HE NDPA frame;
FIG. 8 is a schematic diagram of a network structure to which a method for sending/receiving a null data packet announcement frame is applicable according to this application;
FIG. 9 is a schematic diagram of a structure of a communication apparatus according to an embodiment of this application;
FIG. 10 is a schematic diagram of a structure of a chip according to an embodiment of this application;
FIG. 11 is a schematic flowchart of a method for sending/receiving a null data packet announcement frame according to an embodiment of this application;
FIG. 12a to FIG. 12d each are a schematic diagram of a structure of a 4-byte first station information field in an EHT NDPA frame according to an embodiment of this application;
FIG. 13 is a schematic diagram of subcarrier division under an 80 MHz bandwidth in the 802.11be;
FIG. 14a to FIG. 14c each are a schematic diagram of a structure of an 8-byte first station information field in an EHT NDPA frame according to an embodiment of this application;
FIG. 15 is a schematic flowchart of another method for sending/receiving a null data packet announcement frame according to an embodiment of this application;
FIG. 16 is a schematic diagram of a structure of another communication apparatus according to an embodiment of this application;
FIG. 17 is a schematic diagram of a structure of another communication apparatus according to an embodiment of this application;
FIG. 18 is a schematic diagram of a structure of another communication apparatus according to an embodiment of this application; and
FIG. 19 is a schematic diagram of a structure of another communication apparatus according to an embodiment of this application.

### DESCRIPTION OF EMBODIMENTS

The following describes embodiments of this application with reference to the accompanying drawings in embodiments of this application.

### Transmission bandwidth and number of spatial streams allowed in each WLAN standard

A WLAN develops from 802.11a/g to 802.11n, 802.11ac, and 802.11ax, and now reaches 802.11be. The transmission bandwidth and the number of spatial streams allowed in the WLAN standard are described in the following Table 1.

**Table 1**

| | 802.11a/g | 802.11n (HT) | 802.11ac (VHT) | 802.11ax (HE) | 802.11be (EHT) |
|---|---|---|---|---|---|
| Bandwidth | 20 MHz | 20, 40 MHz | 20, 40, 80, 160 MHz | 20, 40, 80, 160 MHz | 20, 40, 80, 160, 240, 320 MHz |
| Number of spatial streams | 1 | 1-4 | 1-8 | 1-8 | 9-16 |

The 802.11n standard is also referred to as high throughput (high throughput, HT). The standards prior to HT, such as 802.11a/b/g, are collectively referred to as non-high throughput (non-high throughput, Non-HT). The 802.11ac standard is also referred to as VHT. The 802.11ax standard is also referred to as HE. The 802.11be standard is also referred to as EHT. The 802.11b uses a non-orthogonal frequency division multiplexing (orthogonal frequency division multiplexing, OFDM) mode, and therefore is not listed in Table 1.

### Channel sounding process in the 802.11ac

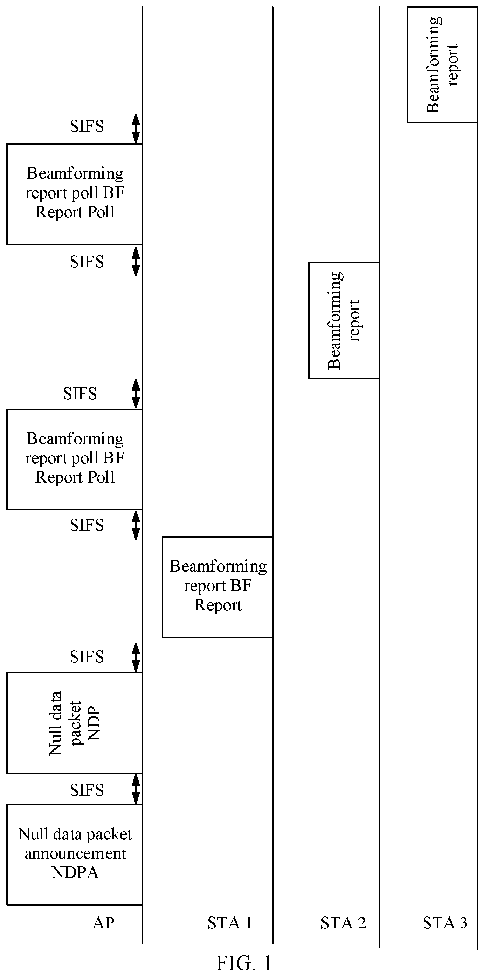

FIG. 1 is a schematic diagram of a channel sounding process in the 802.11ac. An AP sends an NDPA frame to notify, of a related channel sounding parameter, a STA that needs to perform channel sounding. Then, the AP sends a null data packet (null data packet, NDP) after a short inter-frame space (short inter-frame space, SIFS).

The STA generates a beamforming report (beamforming report, BF report) by performing channel estimation on the NDP, and then feeds back channel state information by using a beamforming report frame. Specifically, according to a specific reporting sequence, a STA 1 feeds back channel state information of the STA 1 by using a beamforming report frame, then the AP sends a beamforming report poll (BF report poll) frame to request, from a STA 2, channel state information that has not been fed back by the STA 2, and then the AP sends a beamforming report poll frame to request, from a STA 3, channel state information that has not been fed back by the STA 3. The rest can be deduced by analogy, until all STAs feed back channel state information. In addition, the AP may also request, by using a beamforming report poll frame, channel state information of a STA on which a feedback error occurs.

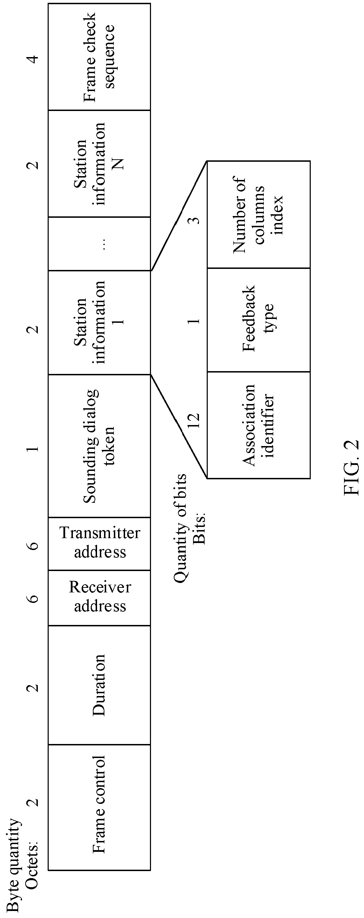

An NDPA frame in the 802.11ac is referred to as a VHT NDPA frame. FIG. 2 is a schematic diagram of a structure of a VHT NDPA frame. The VHT NDPA frame includes a frame control (frame control) field, a duration (duration) field, a receiver address (receiver address, RA) field, a transmitter address (transmitter address, TA) field, a sounding dialog token (sounding dialog token) field, a station information (STA information) 1 field, ..., a station information N field, and a frame check sequence (FCS) field. The frame control field includes a frame type and subtype field. The frame control field indicates that the frame is an NDPA frame. For example, if a frame type is set to 01, it indicates that the frame is a control frame. If a subtype is set to 0101, it indicates that the frame is an NDPA frame in a control frame. The sounding dialog token is used to index a sequence number of channel sounding. The NDPA frame may include station information fields of one or more STAs, and each station information field is two bytes. Specifically, the station information field includes three subfields: a station association identifier (association identifier, AID), a feedback type (feedback type), and a number of columns (number of columns, N_{c}). The station association identifier is used to identify an associated station. The feedback type includes single-user feedback or multi-user feedback. The number of columns indicates a number of spatial streams fed back by a STA. The FCS field is used to check the NDPA frame. The receiver address field indicates a receiver of a media access control (medium access control, MAC) frame. The transmitter address field indicates a transmitter of the MAC frame.

### Channel sounding process in the 802.11ax

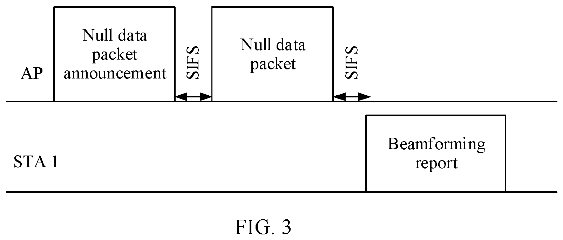

FIG. 3 is a schematic diagram of channel state information of single-user feedback in the 802.11ax. In the schematic diagram, in one channel sounding procedure, only one STA (for example, a STA 1 in the figure) feeds back a beamforming report.

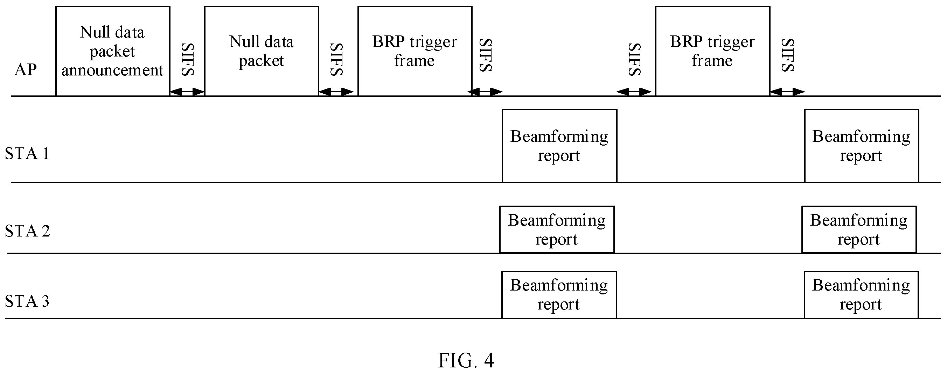

If a plurality of STAs need to feed back beamforming reports, as shown in FIG. 4, a trigger (trigger)-based multi-user uplink transmission mechanism is further introduced in the 802.11ax. After sending an NDP, an AP may send one trigger frame after a short inter-frame space, to trigger the plurality of STAs (for example, a STA 1 to a STA 3 in the figure) to simultaneously perform uplink multi-user transmission. This improves channel sounding efficiency.

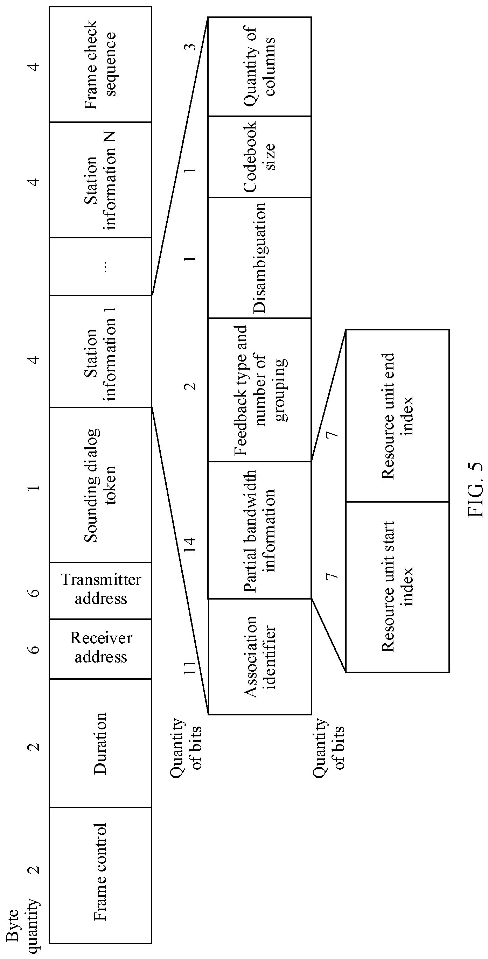

An NDPA frame in the 802.11ax is referred to as an HE NDPA frame. FIG. 5 is a schematic diagram of a structure of an HE NDPA frame. Compared with a VHT NDPA frame, the HE NDPA frame differs in that a station information field is extended to four bytes, and partial bandwidth (partial bandwidth, PBW) information is introduced. The partial bandwidth information indicates a STA to feed back channel state information of a partial bandwidth. Specifically, the partial bandwidth is represented by a resource unit (resource unit, RU) start index (start index) to a resource unit end index (end index), and indicates a contiguous segment of resource unit. A maximum bandwidth in the 802.11ax is 160 MHz, and includes 74 26-tone resource units (26-tone RU, 26 RU for short). Therefore, seven bits may be used to indicate from which resource unit in the 74 resource units the partial bandwidth starts, and another seven bits may be used to indicate to which resource unit in the 74 resource units the partial bandwidth ends. N_{c} is similar to that in the 802.11ac. In the 802.11ac and the 802.11ax, a maximum of eight antennas are defined on a STA side, and a maximum of eight spatial streams are supported. Therefore, 3-bit N_{c} may be used indicate that a number of columns to be fed back is a value from 1 to 8, indicating that a STA can report channel state information of a corresponding number of spatial streams. In addition, the station information field in the HE NDPA frame further includes a number of grouping (number of grouping, N_{g}) for indicating that N_{g} subcarriers in one RU are grouped into one group, and only one piece of channel state information needs to be fed back for this group of subcarriers. This can reduce feedback overheads. In addition, the station information field in the HE NDPA frame further includes a codebook size (codebook size) for indicating quantization precision. Different precisions correspond to different feedback overheads.

### NDPA frame in the 802.11az standard

The 802.11az standard is used for ranging (ranging). An NDPA frame in the 802.11az is referred to as a ranging NDPA frame. A frame format of the ranging NDPA frame is still the same as that of a VHT NDPA frame. Similar to that of an HE NDPA frame, a station information field is four bytes. A specific frame format of the ranging NDPA frame is not described herein again.

This avoids misreading of the HE NDPA frame or the ranging NDPA frame.

It may be learned from the foregoing that, with evolution of the standards, there are a plurality of NDPA frame variants, for example, the VHT NDPA frame, the HE NDPA frame, and the ranging NDPA frame. Therefore, a receiver needs to distinguish the NDPA frame variants, to avoid that a STA of an earlier version misreads an NDPA frame of a later version.

In the VHT standard phase, because only one type of NDPA frame exists, no means for distinguishing NDPA frames is provided, and at that time, a VHT STA cannot distinguish the NDPA frame variants.

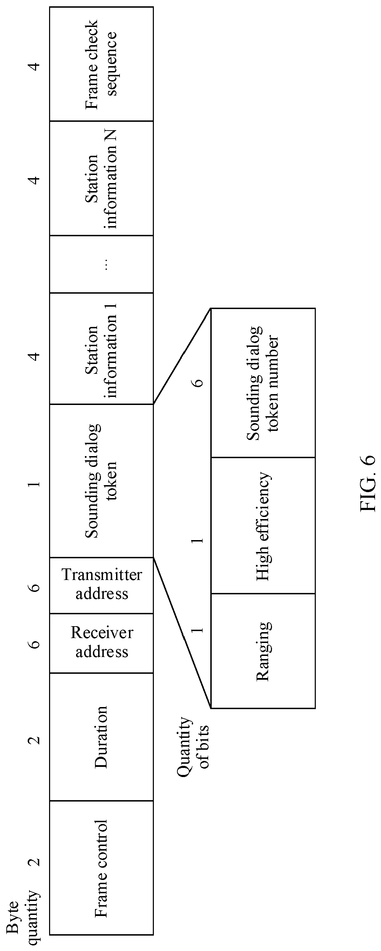

In the HE standard phase, FIG. 6 is a schematic diagram of a structure of a sounding dialog token field. An HE indication is introduced into a second bit of a 1-byte sounding dialog token, to indicate whether the NDPA frame is an HE NDPA frame and distinguish whether the NDPA frame is a VHT NDPA frame or an HE NDPA frame. An HE STA can read two types of NDPA frames at the same time, and determine the type of the NDPA frame based on the bit indication. However, the VHT STA of an earlier version cannot distinguish, and therefore may understand an HE NDPA frame as a VHT NDPA frame.

Still refer to the schematic diagram of the structure of the sounding dialog token field shown in FIG. 6. In the 802.11az, namely, the ranging standard phase, a ranging indication is introduced into a first bit of the 1-byte sounding dialog token, to indicate whether the NDPA frame is a ranging NDPA frame. A STA that supports ranging distinguishes, based on two bits (a ranging indication bit and an HE indication bit), which one of the three variants (the VHT NDPA frame, the HE NDPA frame, and the ranging NDPA frame) the NDPA frame is. Specifically, for example, indication information of the NDPA frame variants is described in the following Table 2.

**Table 2**

| Ranging bit | HE bit | NDPA frame variant |
|---|---|---|
| 0 | 0 | VHT NDPA frame |
| 0 | 1 | HE NDPA frame |
| 1 | 0 | Ranging NDPA frame |
| 1 | 1 | Undefined |

However, the earlier VHT STA cannot determine the type of the NDPA frame, and may understand a ranging NDPA frame as a VHT NDPA frame.

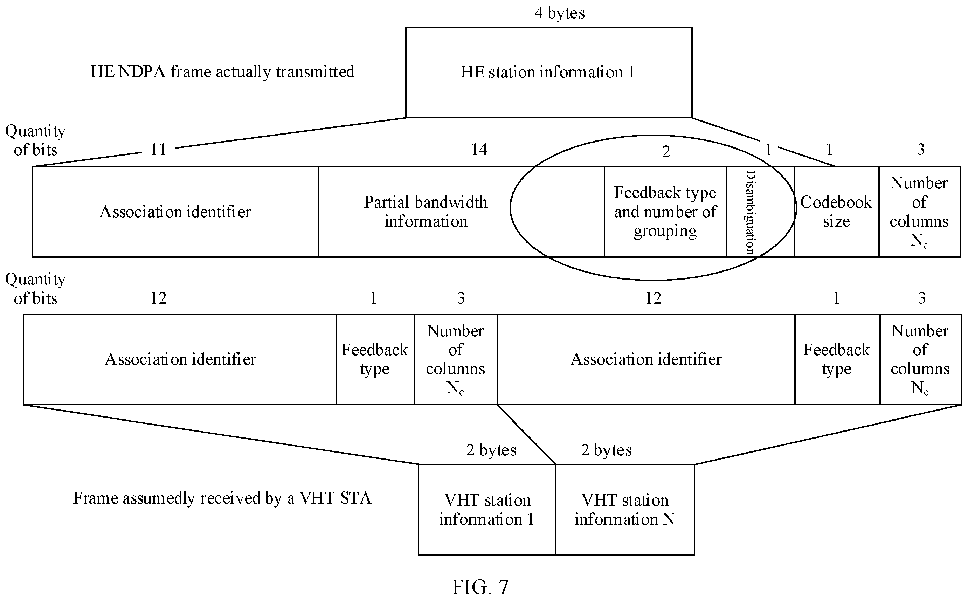

A STA determines, based on an association identifier of station information, whether the NDPA frame is sent to the STA. Because a STA of an earlier version cannot determine a new NDPA variant, the STA of the earlier version needs to avoid mistakenly considering that a portion of an NDPA frame of the new variant is sent to the STA of the earlier version. If misreading occurs, the STA of the earlier version performs unnecessary channel information computation, resulting in buffer waste and power consumption. FIG. 7 is a schematic diagram of avoiding that a VHT STA misreads an HE NDPA frame. For example, when reading an HE NDPA frame, a VHT STA of an earlier version considers second 2 bytes (a 3^{rd} byte and a 4^{th} byte) of 4-byte station information of the HE NDPA frame as second station information of a VHT NDPA frame, and also considers information in first 12 bits of the second 2 bytes as a 12-bit association identifier subfield. If last 9 bits of partial bandwidth information, a feedback type and number of grouping subfield in 2 bits, and a disambiguation bit in 1 bit exactly correspond to an AID of the VHT STA of the earlier version, misreading occurs. Therefore, a disambiguation (disambiguation) bit is introduced into the HE NDPA frame, and forcibly set to 1. This bit corresponds to a most significant bit (most significant bit) of a 12-bit AID. In this case, the VHT STA reads the 12 bits as an AID greater than 2047. Currently, the 802.11 standard has not defined the AID greater than 2047. The VHT STA of the earlier version considers the AID greater than 2047 as an AID of a STA other than the VHT STA of the earlier version. Therefore, no misreading occurs. Because the 802.11 standard has not defined the AID greater than 2047, the HE NDPA frame reduces a quantity of bits of the association identifier to 11 bits, and saves 1 bit for transmitting information.

Similar to that of the HE NDPA frame, station information of the ranging NDPA frame is four bytes. In addition, the disambiguation bit is introduced to avoid misreading of the VHT STA of the earlier version. For an HE STA, because information of an association identifier of an HE NDPA frame is the same as information of an association identifier of a ranging NDPA frame, and a channel sounding initiator does not send a ranging NDPA frame to an HE STA of an earlier version not for ranging, no misreading occurs.

However, in the foregoing solution, no design of an EHT NDPA frame is proposed to support channel sounding on a larger bandwidth and a larger number of streams. How to avoid that a STA of an earlier version misreads a new NDPA frame variant is not proposed either.

Therefore, embodiments of this application provide a method and an apparatus for sending/receiving a null data packet announcement frame, and design an EHT NDPA frame. In this way, when receiving the EHT NDPA frame, a STA considers that the frame is for HE sounding, further determines, based on an indication of a first bit of first station information in the EHT NDPA frame, that the NDPA frame is an EHT NDPA frame, and performs EHT sounding to obtain and feed back channel state information of a larger number of streams.

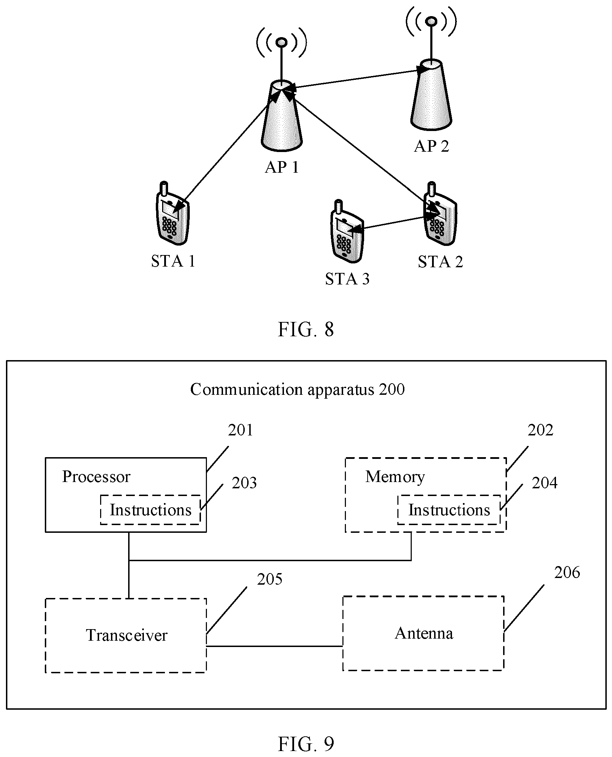

For example, FIG. 8 illustrates a network structure to which a method for sending/receiving a null data packet announcement frame is applicable according to this application. FIG. 8 is a schematic diagram of a network structure according to an embodiment of this application. The network structure may include one or more access point (access point, AP) stations and one or more non-access point stations (non-access point station, non-AP STA). For ease of description, an access point station is referred to as an access point (AP), and a non-access point station is referred to as a station (STA) in this specification. The APs are, for example, an AP 1 and an AP 2 in FIG. 8, and the STAs are, for example, a STA 1, a STA 2, and a STA 3 in FIG. 8.

The access point may be an access point used by a terminal device (such as a mobile phone) to access a wired (or wireless) network, and is mainly deployed at home, in a building, and in a campus. A typical coverage radius is tens of meters or more than 100 meters. Certainly, the access point may alternatively be deployed outdoors. The access point is equivalent to a bridge for connecting a wired network and a wireless network, and mainly functions to connect various wireless network clients together and then connect the wireless network to the Ethernet. Specifically, the access point may be a terminal device (such as a mobile phone) or a network device (such as a router) with a wireless fidelity (wireless fidelity, Wi-Fi) chip. The access point may be a device that supports the 802.11be standard. Alternatively, the access point may be a device that supports a plurality of wireless local area network (wireless local area network, WLAN) standards of the 802.11 family such as 802.11be, 802.11ax, 802.11ac, 802.11n, 802.11g, 802.11b, and 802.11a. The access point in this application may be an HE AP or an EHT AP, or may be an access point applicable to a next-generation Wi-Fi standard.

The access point may include a processor and a transceiver. The processor is configured to control and manage an action of the access point, and the transceiver is configured to receive or send information.

The station may be a wireless communication chip, a wireless sensor, a wireless communication terminal, or the like, and may also be referred to as a user. For example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, a computer supporting a Wi-Fi communication function, or the like. Optionally, the station may support the 802.11be standard. The station may also support a plurality of WLAN standards of the 802.11 family such as 802.11be, 802.11ax, 802.11ac, 802.11n, 802.11g, 802.11b, and 802.11a.

The station may include a processor and a transceiver. The processor is configured to control and manage an action of the access point, and the transceiver is configured to receive or send information.

The access point in this application may be an HE STA or an EHT STA, or may be a STA applicable to a next-generation Wi-Fi standard.

For example, the access point and the station may be devices used in the internet of vehicles, internet of things nodes, sensors, or the like in the internet of things (internet of things, IoT), smart cameras, smart remote controls, smart water or electricity meters, or the like in a smart home, sensors in a smart city, and the like.

The access point and the station in embodiments of this application may also be collectively referred to as communication apparatuses. The communication apparatus may include a hardware structure and a software module, and the foregoing functions are implemented in a form of a hardware structure, a software module, or a combination of the hardware structure and the software module. A function in the foregoing functions may be performed in a form of a hardware structure, a software module, or a combination of the hardware structure and the software module.

FIG. 9 is a schematic diagram of a structure of a communication apparatus according to an embodiment of this application. As shown in FIG. 9, the communication apparatus 200 may include a processor 201 and a transceiver 205, and optionally further includes a memory 202.

The transceiver 205 may be referred to as a transceiver unit, a transceiver machine, a transceiver circuit, or the like, and is configured to implement a transceiver function. The transceiver 205 may include a receiver and a transmitter.

The receiver may be referred to as a receiver machine, a receiver circuit, or the like, and is configured to implement a receiving function. The transmitter may be referred to as a transmitter machine, a transmitter circuit, or the like, and is configured to implement a sending function.

The memory 202 may store a computer program, software code, or instructions 204, where the computer program, the software code, or the instructions 204 may also be referred to as firmware. The processor 201 may control a MAC layer and a physical (physical, PHY) layer by running a computer program, software code, or instructions 203 in the processor 201, or by invoking the computer program, the software code, or the instructions 204 stored in the memory 202, to implement a method for sending/receiving a null data packet announcement frame provided in the following embodiments of this application. The processor 201 may be a central processing unit (central processing unit, CPU), and the memory 302 may be, for example, a read-only memory (read-only memory, ROM), or a random access memory (random access memory, RAM).

The processor 201 and the transceiver 205 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The communication apparatus 200 may further include an antenna 206. The modules included in the communication apparatus 200 are merely examples for description, and are not limited in this application.

As described above, the communication apparatus 200 described in the foregoing embodiment may be an access point or a station. However, the scope of the communication apparatus described in this application is not limited thereto, and the structure of the communication apparatus may not be limited to the structure in FIG. 9. The communication apparatus may be an independent device or may be a part of a large device. For example, the communication apparatus may be implemented in the following form:
(1) an independent integrated circuit (IC), a chip, a chip system, or a subsystem; (2) a set including one or more ICs, where optionally, the set of ICs may also include a storage component for storing data and instructions; (3) a module that can be embedded in another device; (4) a receiver, an intelligent terminal, a wireless device, a handheld device, a mobile unit, a vehicle-mounted device, a cloud device, an artificial intelligence device, or the like; or (5) others.

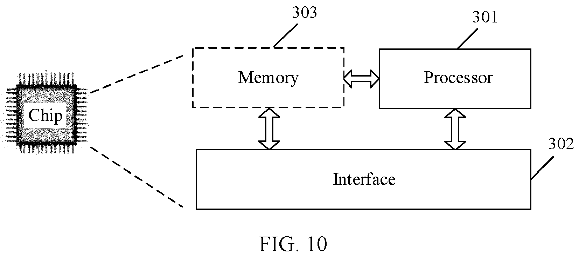

For the communication apparatus implemented in the form of the chip or the chip system, refer to a schematic diagram of a structure of a chip shown in FIG. 10. The chip shown in FIG. 10 includes a processor 301 and an interface 302.

There may be one or more processors 301, and there may be a plurality of interfaces 302. Optionally, the chip or the chip system may include a memory 303.

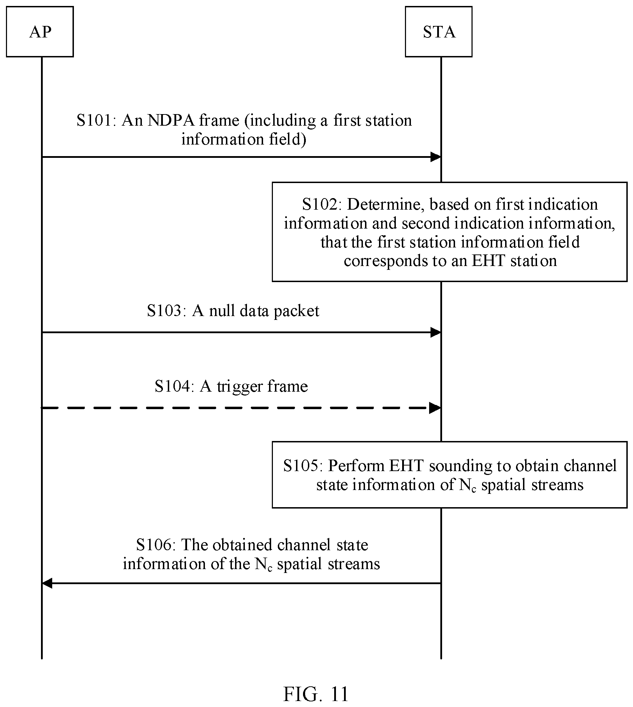

Embodiments of this application do not limit the protection scope and applicability of the claims. A person skilled in the art may adaptively change functions and deployments of elements in this application, or omit, replace, or add various processes or components as appropriate without departing from the scope of embodiments of this application. FIG. 11 is a schematic flowchart of a method for sending/receiving a null data packet announcement frame according to an embodiment of this application. For example, the method includes the following steps.

S101: An AP sends an NDPA frame. The NDPA frame includes a sounding dialog token and a first station information field. The sounding dialog token includes first indication information. The first indication information indicates that the NDPA frame is for EHT sounding or HE sounding. A first bit of the first station information field includes second indication information. The second indication information indicates that the first station information field corresponds to an EHT station or an HE station.

It may be understood that there may be one or more first station information fields. Each first station information field corresponds to one STA.

Correspondingly, a STA attempts to receive the NDPA frame. When finding that an association identifier included in the first station information field is the same as that of the STA, the STA continues to parse the first station information field to obtain other information.

In this embodiment, the AP indicates the STA to perform EHT sounding. FIG. 6 is a schematic diagram of a frame structure of an EHT NDPA frame. The EHT NDPA frame includes a frame control field, a duration field, a receiver address field, a transmitter address field, a sounding dialog token field, N station information fields, and a frame check sequence field. Herein, N is an integer greater than or equal to 1. A difference between the EHT NDPA frame and a VHT NDPA frame or an HE NDPA frame mainly lies in the first station information field. In addition, information for indicating ranging and information for indicating high efficiency that are included in the sounding dialog token are also different from those in the VHT NDPA frame or the HE NDPA frame. Therefore, this embodiment focuses on the sounding dialog token field and the first station information field. For meanings of other fields, refer to the foregoing descriptions.

The sounding dialog token occupies one byte. The sounding dialog token includes: information for indicating ranging, information for indicating HE, and information for indicating a sounding dialog token number. The information for indicating ranging occupies one bit. The information for indicating HE occupies one bit. The information for indicating the sounding dialog token number occupies six bits. Certainly, this is not limited in this embodiment.

In this embodiment, the sounding dialog token includes the first indication information. The first indication information indicates EHT sounding or HE sounding. Therefore, a STA of an HE version or a later version considers that the NDPA frame is for EHT sounding or HE sounding. Specifically, the first indication information includes the information for indicating ranging and the information for indicating HE. If a bit for indicating ranging is set to "0", and a bit for indicating HE is set to "1", based on the foregoing Table 2 and further extended explanation of the first indication information in this embodiment, the STA determines EHT sounding or HE sounding.

After determining EHT sounding or HE sounding, the STA further determines, based on the first station information field, that the first station information field corresponds to an HE station or an EHT station. In this embodiment, the NDPA frame includes the first station information field. The first bit of the first station information field includes the second indication information. The second indication information indicates that the first station information field corresponds to an HE station or an EHT station.

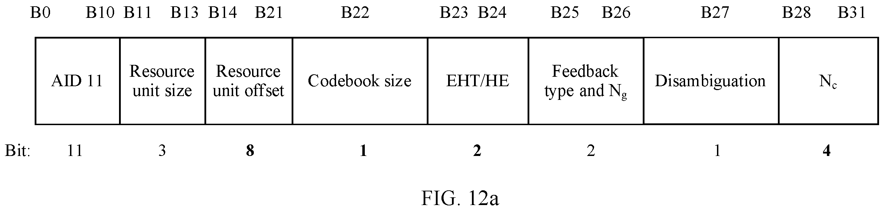

In a possible implementation, a first station information field in the EHT NDPA frame includes four bytes. As shown in FIG. 12a to FIG. 12d, first station information fields of four types of EHT NDPA frames are provided. Certainly, this application is not limited to the four EHT NDPA frame structures, and all EHT NDPA frame structures obtained according to the principle of this application fall within the protection scope of this application.

In an example shown in FIG. 12a, bits of the first station information field in the EHT NDPA frame are sequentially identified as B0, B1, B2, ..., and B31. The second indication information of the first station information field is located in B23 and B24 (namely, a 24^{th} bit and a 25^{th} bit of the first station information field). In FIG. 12a, the first bit of the first station information field is B0. If the bits B23 and B24 are both set to "1", when parsing the first station information field to obtain the second indication information, the STA determines that the first station information field corresponds to an EHT STA. If B23 and B24 are set to other values, the STA determines that the first station information field corresponds to an HE STA. In other words, B23 and B24 are used to distinguish whether the first station information field corresponds to an HE STA or an EHT STA, or distinguish whether the NDPA frame is an HE NDPA frame or an EHT NDPA frame. However, in the HE NDPA frame structure shown in FIG. 5, B23 and B24 respectively correspond to a second most significant bit and a most significant bit of the resource unit end index in the HE NDPA frame. If both the second most significant bit and the most significant bit of the resource unit end index are set to "1", a bit value of the resource unit end index is greater than or equal to 96, and the HE NDPA indication rule is no longer complied with. Therefore, the HE STA does not misread the first station information field.

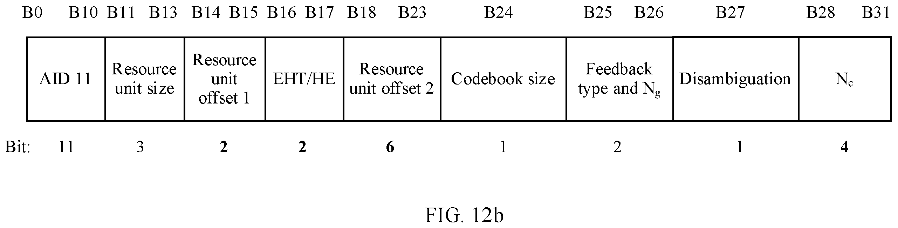

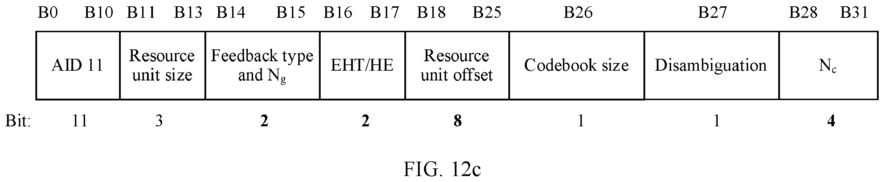

In an example shown in FIG. 12b or FIG. 12c, bits of the first station information field in the EHT NDPA frame are sequentially identified as B0, B1, B2, ..., and B31. The second indication information of the first station information field is located in B16 and B17 (namely, a 17^{th} bit and an 18^{th} bit of the first station information field). In FIG. 12b or FIG. 12c, the first bit of the first station information field is B0. If the bits B 16 and B17 are both set to "1", when parsing the first station information field to obtain the second indication information, the STA determines that the first station information field corresponds to an EHT STA. If B 16 and B17 are set to other values, the STA determines that the first station information field corresponds to an HE STA. In other words, B 16 and B17 are used to distinguish whether the first station information field corresponds to an HE STA or an EHT STA, or distinguish whether the NDPA frame is an HE NDPA frame or an EHT NDPA frame. However, in the HE NDPA frame structure shown in FIG. 5, B 16 and B17 respectively correspond to a second most significant bit and a most significant bit of the resource unit start index in the HE NDPA frame. If both the second most significant bit and the most significant bit of the resource unit start index are set to "1", a bit value of the resource unit start index is greater than or equal to 96, and the HE NDPA indication rule is no longer complied with. Therefore, the HE STA does not misread that the first station information field corresponds to an HE STA.

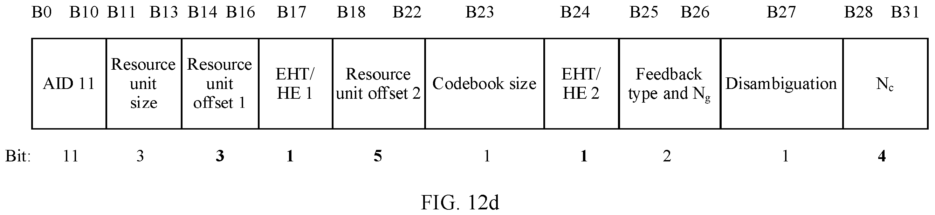

In an example shown in FIG. 12d, bits of the first station information field in the EHT NDPA frame are sequentially identified as B0, B1, B2, ..., and B31. The second indication information of the first station information field is located in B17 and B24 (namely, an 18^{th} bit and a 25^{th} bit of the first station information field). In FIG. 12d, the first bit of the first station information field is B0. If the bit B17 is set to "1", and the bit B24 is set to "0", when parsing the first station information field to obtain the second indication information, the STA determines that the first station information field corresponds to an EHT STA. If B17 and B24 are set to other values, the STA determines that the first station information field corresponds to an HE STA. In other words, B17 and B24 are used to distinguish whether the first station information field corresponds to an HE STA or an EHT STA, or distinguish whether the NDPA frame is an HE NDPA frame or an EHT NDPA frame. However, in the HE NDPA frame structure shown in FIG. 5, B17 is equivalent to a most significant bit of the resource unit start index in the HE NDPA frame, and B24 is equivalent to a most significant bit of the resource unit end index in the HE NDPA frame. If B17 is set to "1" and B24 is set to "0", the resource unit start index is greater than the resource unit end index, and the HE NDPA indication rule is no longer complied with. Therefore, the HE STA does not misread that the first station information field corresponds to an HE STA.

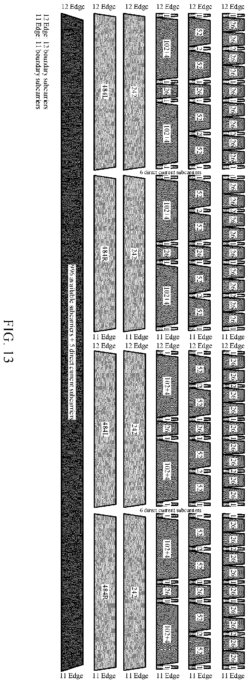

In FIG. 12a to FIG. 12d, the first station information field further includes other information.
(1) AID information is used to identify an associated station, specifically indicates a station number, and generally may be located in a first subfield in the first station information field. The AID information may occupy 11 bits, namely, B0 to B10. Certainly, a size of the AID information may not be limited, and a bit in which the AID information is located may not be limited either.
(2) A resource unit size (RU size) indicates a size of an RU allocated by an AP to a STA for channel sounding, and may occupy three bits, namely, B11 to B 13. Certainly, the resource unit size may not be limited, and a bit for indicating the resource unit size may not be limited either. Specifically, FIG. 13 is a schematic diagram of subcarrier division under an 80 MHz bandwidth in the 802.11be. In this embodiment, to improve bandwidth usage, different quantities of subcarriers may be combined to form one RU. As shown in FIG. 13, if all subcarriers in the 80 MHz bandwidth are grouped into one RU, a 996-tone RU (996 RU for short) is formed, including 996 subcarriers. In addition, the 80 MHz bandwidth may be divided into more RUs. A larger quantity of RUs obtained by dividing the 80 MHz bandwidth indicates a smaller quantity of subcarriers in each RU. For example, the 80 MHz bandwidth may be divided into two 484-tone RUs (484-RUs for short), and each RU has 484 subcarriers; or the 80 MHz bandwidth may be divided into four 242-tone RUs (242-RUs for short), eight 106-tone RUs (106-RUs for short), 16 52-tone RUs (52-RUs for short), or 36 26-tone RUs. The 802.11be supports a bandwidth greater than 160 MHz, for example, a 240 MHz bandwidth and a 320 MHz bandwidth. For the 240 MHz bandwidth and the 320 MHz bandwidth, each 80 MHz bandwidth is divided into RUs in the same manner. The 320 MHz bandwidth is used as an example. When the bandwidth is divided into 26-tone RUs, a maximum of 144 RUs may be obtained. When the bandwidth is divided into 52-tone RUs, a maximum of 64 RUs may be obtained. When the bandwidth is divided into 106-tone RUs, a maximum of 32 RUs may be obtained. When the bandwidth is divided into 242-tone RUs, a maximum of 16 RUs may be obtained. When the bandwidth is divided into 484-tone RUs, a maximum of 8 RUs may be obtained. When the bandwidth is divided into 996-tone RUs, a maximum of 4 RUs may be obtained. Each piece of first station information includes one primary resource unit. In other words, an AP allocates one primary resource unit to each STA. A resource unit size indicates a size of any one of the following primary resource units: a 26 RU, a 52 RU, a 106 RU, a 242 RU, a 484 RU, and a 996 RU.

To further improve bandwidth usage and provide a larger bandwidth, multiple RU (multiple RU, MRU) combination may be performed for the primary resource unit in this embodiment. The primary resource unit is relative to a secondary resource unit. A quantity of subcarriers included in the secondary resource unit is generally less than a quantity of subcarriers of the primary resource unit. For example, the secondary resource unit is generally a lowerlevel resource unit of the primary resource unit. For example, the primary resource unit is a 52-tone RU, and the secondary resource unit is a 26-tone RU.

### (3) Resource unit offset (RU offset)

In a possible implementation, the resource unit offset indicates a frequency domain location of a primary resource unit, and the frequency domain location of the primary resource unit belongs to a first segment or a second segment. The "segment" herein is a quantity range of primary resource units indicated by the resource unit offset. In this embodiment, for example, a 320 MHz bandwidth is supported. The 320 MHz bandwidth includes 144 26-tone RUs. Whether the 144 26-tone RUs are further divided into the first segment and the second segment, specifically whether the 144 26-tone RUs included in the 320 MHz bandwidth are further divided into different RU quantity ranges, is determined based on the resource unit offset and/or a quantity of bits for indicating an MRU. For example, if the resource unit offset includes eight bits, the eight bits can indicate locations of the 144 26-tone RUs. In this case, the eight bits may indicate a location of any RU of the 144 26-tone RUs. If the resource unit offset includes seven bits, the seven bits may indicate locations of only 128 26-tone RUs. In this case, the 144 26-tone RUs are divided into 0^{th} to 127^{th} 26-tone RUs (the first segment) and 128^{th} to 143^{rd} 26-tone RUs (the second segment). Then, it may be determined, based on the indication information of the resource unit size, that the frequency domain location of the primary resource unit indicated by the resource unit offset belongs to the first segment or the second segment.

For another example, the 320 MHz bandwidth includes 64 52-tone RUs. Whether the 64 52-tone RUs are further divided into the first segment and the second segment, specifically whether the 64 52-tone RUs included in the 320 MHz bandwidth are further divided into different RU quantity ranges, is determined based on the resource unit offset and/or a quantity of bits for indicating an MRU. For example, if the resource unit offset includes six bits for indicating a location of a primary resource unit, the six bits can indicate locations of the 64 52-tone RUs. In this case, the six bits may indicate a location of any RU of the 64 52-tone RUs. If the resource unit offset includes five bits for indicating a location of a primary resource unit, the five bits may indicate locations of only 32 52-tone RUs. In this case, the 64 52-tone RUs are divided into 0^{th} to 31^{st} 52-tone RUs (the first segment) and 32^{nd} to 63^{rd} 52-tone RUs (the second segment). Then, it may be determined, based on the indication information of the resource unit size, that the frequency domain location of the primary resource unit indicated by the resource unit offset belongs to the first segment or the second segment.

In another possible implementation, when the primary resource unit includes a plurality of 996-tone RUs, the resource unit offset indicates a frequency domain location of each of the plurality of 996-tone RUs. Specifically, when the resource unit size is 2*996-tone RU, 3*996-tone RU, or 4*996-tone RU, the resource unit offset is a bitmap (bitmap) that separately indicates whether a 996-tone RU is configured at the frequency domain location. Generally, four bits indicate the frequency domain location of each of the plurality of 996-tone RUs. For example, if the resource unit offset is "1110", it indicates that the resource unit size is 3 *996-tone RU and indicates a frequency domain location of each of three 996-tone RUs. For another example, if the resource unit offset is "0011", it indicates that the resource unit size is 2*996-tone RU and indicates a frequency domain location of each of two 996-tone RUs.

In another possible implementation, the resource unit offset indicates a frequency domain location of a primary resource unit and a configuration of a secondary resource unit combined with the primary resource unit. Specifically, to further improve bandwidth usage and provide a larger bandwidth, MRU combination may be performed in this embodiment. Some bits in the resource unit offset indicate the frequency domain location of the primary resource unit, and remaining several bits indicate the configuration of the secondary resource unit combined with the primary resource unit. The remaining several bits may also be a bitmap that indicates whether the secondary resource unit is configured at the frequency domain location. For example, two bits separately indicate whether a secondary resource unit is configured on a left side and a right side of the primary resource unit. If a first bit is set to "1", it indicates that a secondary resource unit is configured on the left side of the primary resource unit; or if a first bit is set to "0", it indicates that no secondary resource unit is configured on the left side of the primary resource unit. If a second bit is set to "1", it indicates that a secondary resource unit is configured on the right side of the primary resource unit; or if a second bit is set to "0", it indicates that no secondary resource unit is configured on the right side of the primary resource unit.

The following separately describes specific examples.

In an example, the RU size includes three bits, and the RU offset includes eight bits. Specific meanings of the indication information of the RU size and the RU offset is described in the following Table 3.

**Table 3**

| Value of RU size | Meaning of value of RU size | Quantity of RUs under a 320 MHz bandwidth | Corresponding RU offset indication |
|---|---|---|---|
| 0 | 26-tone RU | 144 | Eight bits indicate a location of a 26-tone RU. |
| 1 | 52-tone RU | 64 | Six bits indicate a location of a 52-tone RU, and remaining |
| | | | two bits indicate MRU information. |
| 2 | 106-tone RU | 32 | Five bits indicate a location of a 106-tone RU, and remaining three bits or fewer bits indicate MRU information. |
| 3 | 242-tone RU | 16 | Four bits indicate a location of a 242-tone RU, and remaining four bits or fewer bits indicate MRU information. |
| 4 | 484-tone RU | 8 | Three bits indicate a location of a 484-tone RU, and remaining five bits or fewer bits indicate MRU information. |
| 5 | 996-tone RU | 4 | When a primary resource unit includes a plurality of 996-tone RUs, four bits indicate a location of each 996-tone RU, and remaining four bits or fewer bits indicate MRU information. |
| 6 | Reserved | | |
| 7 | Reserved | | |

In Table 3, it may be learned that when the primary RU uses a 26-tone RU, the 320 MHz bandwidth may be divided into 144 26-tone RUs, and an 8-bit RU offset may indicate a location of one 26-tone RU allocated to one STA. In this case, there is no secondary RU on two sides of the primary RU. Herein, the 8-bit RU offset can indicate the 144 26-tone RUs. Therefore, the 144 26-tone RUs are not further divided into different bandwidth ranges.

When the primary RU uses a 52-tone RU, the 320 MHz bandwidth may be divided into 64 52-tone RUs, and six bits may indicate a location of one 52-tone RU. In addition, as shown in FIG. 13, a smaller RU, namely, a 26-tone RU, may exist on a left side or a right side of a 52-tone RU. The 26-tone RU may be combined into the 52-tone RU as a secondary RU. In this case, the remaining two bits may indicate whether the 26-tone RU exists on the left side or the right side of the 52-tone RU. For example, as shown in FIG. 12a, the two bits may be B20 and B21. In this case, B20 may indicate whether a 26-tone RU exists on a left side of a 52-tone RU. If a bit value of B20 is set to "1", it indicates that the 26-tone RU exists on the left side of the 52-tone RU. If a bit value of B20 is set to "0", it indicates that no 26-tone RU exists on the left side of the 52-tone RU. B21 indicates whether a 26-tone RU exists on a right side of the 52-tone RU. If a bit value of B21 is set to "1", it indicates that the 26-tone RU exists on the right side of the 52-tone RU.

If a bit value of B21 is set to "0", it indicates that no 26-tone RU exists on the right side of the 52-tone RU. Herein, the 6-bit RU offset can indicate the 64 52-tone RUs. Therefore, the 64 52-tone RUs are not further divided into different bandwidth ranges.

When the primary RU uses a 106-tone RU, the 320 MHz bandwidth may be divided into 32 106-tone RUs, and five bits may indicate a location of one 106-tone RU allocated to one STA. In addition, as shown in FIG. 13, a smaller RU, namely, a 26-tone RU, may exist on a left side or a right side of a 106-tone RU. The 26-tone RU may be combined into the 106-tone RU as a secondary RU. In this case, the remaining three bits or fewer bits may indicate whether the 26-tone RU exists on the left side or the right side of the 106-tone RU. For example, as shown in FIG. 12a, two bits indicate whether a 26-tone RU exists on a left side or a right side of a 106-tone RU. The two bits may be B20 and B21. In this case, B20 may indicate whether a 26-tone RU exists on a left side of a 106-tone RU. If a bit value of B20 is set to "1", it indicates that the 26-tone RU exists on the left side of the 106-tone RU. If a bit value of B20 is set to "0", it indicates that no 26-tone RU exists on the left side of the 106-tone RU. B21 indicates whether a 26-tone RU exists on a right side of the 106-tone RU. If a bit value of B21 is set to "1", it indicates that the 26-tone RU exists on the right side of the 106-tone RU. If a bit value of B21 is set to "0", it indicates that no 26-tone RU exists on the right side of the 106-tone RU.

When the primary RU uses a 242-tone RU, the 320 MHz bandwidth may be divided into 16 242-tone RUs, and four bits may indicate a location of one 242-tone RU allocated to one STA. In addition, the remaining four bits or fewer bits may indicate whether an RU at a level lower than the 242-tone RU exists on a left side or a right side of the 242-tone RU. An indication manner is similar to that described above.

When the primary RU uses a 484-tone RU, the 320 MHz bandwidth may be divided into 8 484-tone RUs, and three bits may indicate a location of one 484-tone RU allocated to one STA. In addition, the remaining five bits or fewer bits may indicate whether an RU at a level lower than the 484-tone RU exists on a left side or a right side of the 484-tone RU. An indication manner is similar to that described above.

The 320 MHz bandwidth may be divided into 4 996-tone RUs, and four bits may indicate a location of each of one or more 996-tone RUs allocated to one STA. When the resource unit size is 2*996-tone RU, 3*996-tone RU, or 4*996-tone RU, the resource unit offset is a bitmap (bitmap) that separately indicates whether a 996-tone RU is configured at the frequency domain location. Generally, four bits indicate the frequency domain location of each of the plurality of 996-tone RUs. For example, if the resource unit offset is "1110", it indicates that the resource unit size is 3*996-tone RU and indicates a frequency domain location of each of three 996-tone RUs. For another example, if the resource unit offset is "1001", it indicates that the resource unit size is 2*996-tone RU and indicates a frequency domain location of each of two 996-tone RUs. In addition, the remaining four bits or fewer bits may indicate whether an RU at a level lower than the 996-tone RU exists on a left side or a right side of the 996-tone RU.

In a station field structure shown in FIG. 12a, an RU offset field may occupy eight continuous bits in total from B14 to B21.

In a station field structure shown in FIG. 12b, an RU offset field may occupy eight bits in total from B14 to B15 and from B18 to B23.

In a station field structure shown in FIG. 12c, an RU offset field may occupy eight continuous bits in total from B18 to B25.

In a station field structure shown in FIG. 12d, an RU offset field may occupy eight bits in total from B14 to B16 and from B18 to B22.

In another example, the RU size includes three bits, and the RU offset includes seven bits. Compared with the foregoing example, the RU offset occupies one bit less, and the one bit may indicate a codebook size, a feedback type, and Ng, to increase a channel state information feedback type. Alternatively, the one bit may be reserved. Specific meanings of the indication information of the RU size and the RU offset is described in the following Table 4.

Different from the example in Table 3, the resource unit offset is seven bits. If the RU size indicates that the primary RU is a 26-tone RU, because the 320 MHz bandwidth includes 144 26-tone RUs, and the 7-bit resource unit offset may indicate only 128 26-tone RUs, the 144 26-tone RUs are divided into 0^{th} to 127^{th} 26-tone RUs (corresponding to the first segment) and 128^{th} to 143^{rd} 26-tone RUs (corresponding to the second segment). Then, based on the indication of the resource unit size, it is determined that the primary RU belongs to the first segment or the second segment. For example, if a bit value of the resource unit size is "000" (converted into decimal "0"), it indicates that the primary RU belongs to a range of 0^{th} to 127^{th} 26-tone RUs. If a bit value of the resource unit size is "001" (converted into decimal "1"), it indicates that the primary RU belongs to a range of 128^{th} to 143^{rd} 26-tone RUs.

In addition, compared with Table 3, there is one bit less for indicating an MRU in the resource unit offset.

**Table 4**

| Value of RU size/RU offset segment indication | Meaning of value of RU size | Quantity of RUs under a 320 MHz bandwidth | Corresponding RU offset/MRU field structure |
|---|---|---|---|
| 0 | 26 RU | 144 | Seven bits indicate a location of a 26 RU in a range from 0^{th} to 127^{th}. |
| 1 | 26 RU | 144 | Seven bits indicate a location of a 26 RU in a range from 128^{th} to 143^{rd}. |
| 2 | 52 RU | 64 | Six bits indicate a location of a 52 RU, and one bit indicates whether an MRU exists. |
| 3 | 106 RU | 32 | Five bits indicate a location of a 106 RU, and two bits indicate MRU information. |
| 4 | 242 RU | 16 | Four bits indicate a location of a 242 RU, and three bits or fewer bits indicate MRU information. |
| 5 | 484 RU | 8 | Three bits indicate a location of a 484 RU, and four bits or fewer bits indicate MRU information. |
| 6 | 996 RU | 4 | Four bits are used for bit mapping to indicate a location of a 996 RU under the maximum 320 MHz bandwidth, and three bits or fewer bits indicate MRU information. |
| 7 | Reserved | | |

In another example, the RU size includes three bits, and the RU offset includes seven bits. Compared with the foregoing example, the RU offset occupies one bit less, and the one bit may indicate a codebook size, a feedback type, and Ng, to increase a channel state information feedback type. Alternatively, the one bit may be reserved. Specific meanings of the indication information of the RU size and the RU offset is described in the following Table 5.

**Table 5**

| Value of RU size/RU offset segment indication | Meaning of value of RU size | Quantity of RUs under a 320 MHz bandwidth | Corresponding RU offset/MRU field structure |
|---|---|---|---|
| 0 | 26 RU | 144 | Seven bits indicate a location of a 26 RU in a range from 0^{th} to 127^{th}. |
| 1 | 26 RU | 144 | Seven bits indicate a location of a 26 RU in a range from 128^{th} to 143^{rd}. |
| 2 | 52 RU | 64 | Five bits indicate a location of a 52 RU in a range from 0^{th} to 31^{st}, and two bits indicate a specific situation of an MRU. |
| 3 | 52 RU | 64 | Five bits indicate a location of a 52 RU in a range from 32^{nd} to 63^{rd}, and two bits indicate a specific situation of an MRU. |
| 4 | 106 RU | 32 | Five bits indicate a location of a 106 RU, and two bits indicate MRU information. |
| 5 | 242 RU | 16 | Four bits indicate a location of a 242 RU, and three bits indicate MRU information. |
| 6 | 484 RU | 8 | Three bits indicate a location of a 484 RU, and four bits indicate MRU information. |
| 7 | 996 RU | 4 | Four bits are used for bit mapping to indicate a location of a 996 RU under the maximum 320 MHz bandwidth, and three bits indicate MRU information. |

Compared with Table 4, in Table 5, if the 320 MHz bandwidth includes 64 52-tone RUs, five bits indicate a location of a primary RU, and two bits indicate a location of a secondary RU. The five bits may indicate locations of only 32 52-tone RUs. Therefore, the 64 52-tone RUs are divided into 0^{th} to 31^{st} 52-tone RUs (corresponding to the first segment) and 32^{nd} to 63^{rd} 52-tone RUs (corresponding to the second segment). Then, the indication information of the resource unit size is considered. For example, if a bit value of the resource unit size is "010" (converted into decimal "2"), it indicates that the primary RU belongs to a range of 0^{th} to 31^{st} 52-tone RUs. If a bit value of the resource unit size is "011" (converted into decimal "3"), it indicates that the primary RU belongs to a range of 32^{nd} to 63^{rd} 52-tone RUs.
(4) A number of columns N_{c} indicates a number of spatial streams for channel sounding. Specifically, when channel state information of a plurality of spatial streams is fed back by using a beamforming report, N_{c} specifically indicates a number of columns of a feedback beamforming matrix. Information for indicating N_{c} may include four bits, namely, B28 to B31 shown in FIG. 12a to FIG. 12d. Because the 802.11be supports 1 to 16 spatial streams, four bits may be used to indicate channel state information of which spatial streams are fed back. If channel state information is reported in a form of a beamforming report, the channel state information also indicates the number of columns of the feedback beamforming matrix.
(5) A codebook size, a feedback type, and a number of grouping N_{g}, where the codebook size occupies one bit, and the feedback type and the number of grouping N_{g} occupy two bits. The codebook size in one bit and the 2-bit feedback type and the number of grouping N_{g} in two bits jointly indicate joint information such as quantization bits of the feedback beamforming matrix, a subcarrier combination format, and feedback content.
(6) Disambiguation information occupies 1 bit. Based on the disambiguation information, a VHT station may avoid misreading first station information. For a principle of the disambiguation information, refer to the foregoing descriptions.

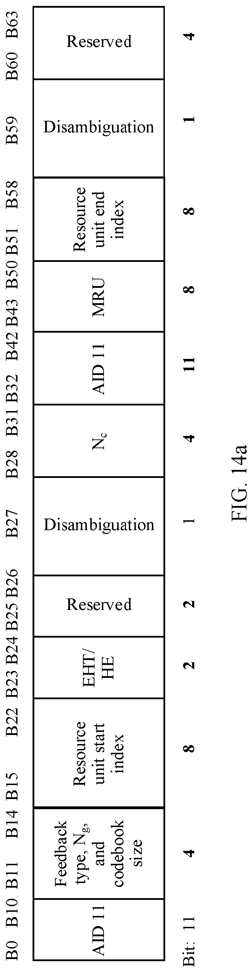

In another possible implementation, a first station information field in an EHT NDPA frame includes eight bytes. In this way, more resources may indicate more detailed information. As shown in FIG. 14a to FIG. 14c, first station information fields of three types of EHT NDPA frames are provided. Certainly, this application is not limited to the three EHT NDPA frame structures, and all EHT NDPA frame structures obtained according to the principle of this application fall within the protection scope of this application.

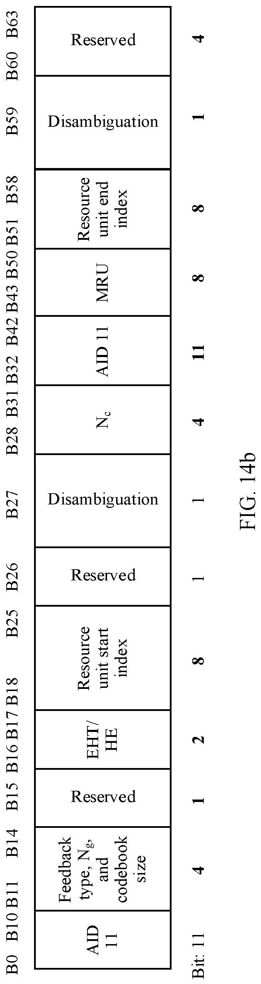

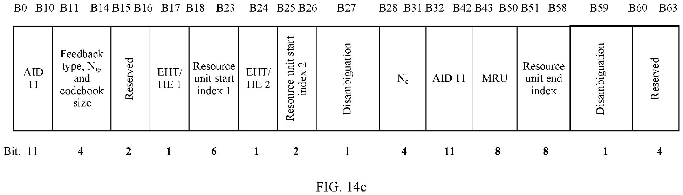

In structures of the first station information fields shown in FIG. 14a to FIG. 14c, a first bit or second indication information of a first station information field still has a same bit location as that in FIG. 12a to FIG. 12d. To be specific, in FIG. 14a, bits of the first station information field in the EHT NDPA frame are sequentially identified as B0, B1, B2, ..., and B63. The second indication information of the first station information field is located in B23 and B24 (namely, a 24^{th} bit and a 25^{th} bit of the first station information field). In FIG. 14b, bits of the first station information field in the EHT NDPA frame are sequentially identified as B0, B1, B2, ..., and B63. The second indication information of the first station information field is located in B16 and B17 (namely, a 17^{th} bit and an 18^{th} bit of the first station information field). In FIG. 14c, bits of the first station information field in the EHT NDPA frame are sequentially identified as B0, B1, B2, ..., and B63. The second indication information of the first station information field is located in B17 and B24 (namely, an 18^{th} bit and a 25^{th} bit of the first station information field).

Different from the field structures shown in FIG. 12a to FIG. 12d, the examples shown in FIG. 14a to FIG. 14c include a first AID and a second AID. For example, the first AID is located in bits B0 to B10, and the second AID is located in bits B32 to B42. The first AID indicates an associated station. A value of the second AID may be the same as a value of the first AID, or a value of the second AID ranges from 2008 to 2046. Generally, a value of an AID ranges from 0 to 2007. When reading B32 to B42, a STA of an HE version or a later version determines that a value of B32 to B42 is greater than 2007, and does not mistakenly consider that the first station information field belongs to an HE station. Alternatively, when reading B32 to B42, an EHT STA reads a value the same as that of B0 to B10, and considers that the first station information field is sent to a same STA. Therefore, the STA can more accurately determine the EHT NDPA frame.

In addition, in the field structures shown in FIG. 12a to FIG. 12d, the first station information field includes the resource unit size. However, in the examples shown in FIG. 14a to FIG. 14c, the first station information field includes a resource unit start index and a resource unit end index. Specifically, the resource unit start index occupies eight bits, and indicates a start location of a measurement subcarrier that needs to be fed back. The resource unit end index occupies eight bits, and indicates an end location of a measurement subcarrier that needs to be fed back.

In the field structures shown in FIG. 12a to FIG. 12d, the first station information field includes the resource unit offset. In the examples shown in FIG. 14a to FIG. 14c, the first station information field includes an MRU. The MRU indicates combination information of multiple RUs. For example, the MRU occupies eight bits, and indicates a location at which a secondary RU exists in a primary RU indicated by the resource unit start index and the resource unit end index. For a specific indication manner, refer to the foregoing related descriptions of the MRU.

S102: A STA determines, based on the first indication information and the second indication information, that the first station information field corresponds to an EHT station.

After receiving the NDPA frame sent to the STA, the STA parses the sounding dialog token in the NDPA frame to obtain the first indication information, namely, the information for indicating ranging and the information for indicating high efficiency. If the first indication information indicates EHT sounding or HE sounding, namely, if a bit of the information for indicating ranging is set to "0", and a bit of the information for indicating high efficiency is set to "1", the STA determines EHT sounding or HE sounding.

Further, the STA parses the second indication information included in the first station information field. Specifically, if the AP uses the structure of the first station information field shown in FIG. 12a, the STA parses bit values of B23 and B24. If B23 and B24 are both set to "1", the STA determines that the NDPA frame is an EHT NDPA frame, and does not mistakenly consider that the NDPA frame is an HE NDPA frame. If the AP uses the structure of the first station information field shown in FIG. 13, the STA parses bit values of B16 and B17. If B16 and B17 are both set to "1", the STA determines that the NDPA frame is an EHT NDPA frame, and does not mistakenly consider that the NDPA frame is an HE NDPA frame. If the AP uses the structure of the first station information field shown in FIG. 14c, the STA parses bit values of B17 and B24. If B17 is set to "1" and B24 is set to "0", the STA determines that the NDPA frame is an EHT NDPA frame, and does not mistakenly consider that the NDPA frame is an HE NDPA frame. S103: The AP sends an NDP.

Correspondingly, the STA receives the NDP.

Specifically, after sending the NDPA frame, the AP may send the NDP after a short inter-frame space.

S104: The AP sends a trigger frame.

Correspondingly, the STA receives the trigger frame.

Specifically, after sending the NDP, the AP may send the trigger frame after a short inter-frame space. The trigger frame is used to trigger the STA to feed back channel state information. When the NDPA frame includes a plurality of first station information fields, in a possible implementation, as shown in FIG. 4, the trigger frame may also trigger a plurality of STAs to simultaneously feed back separately obtained channel state information. In another possible implementation, the AP may alternatively send different trigger frames. For example, a first trigger frame is used to trigger a first STA to feed back obtained channel state information, and a second trigger frame is used to trigger a second STA to feed back obtained channel state information. The AP may determine a time sequence of sending the foregoing different trigger frames.

Alternatively, the STA may perform single-user feedback shown in FIG. 3. In other words, the AP may not send the trigger frame. After obtaining channel state information, the STA feeds back the obtained channel state information to the AP. That is, step S104 is optional and is represented by a dashed line in the figure.

Alternatively, when the NDPA frame includes a plurality of first station information fields, as shown in FIG. 1, after receiving channel state information fed back by one STA, the AP may send a beamforming report poll frame after a short inter-frame space, where one poll frame triggers one STA to feed back obtained channel state information. If a plurality of STAs need to feed back channel state information, after receiving channel state information fed back by a second STA, the AP may send a poll frame after a short inter-frame space. The rest can be deduced by analogy.

S105: The STA performs EHT sounding to obtain channel state information of N_{c} spatial streams, where N_{c} is a positive integer, and a maximum value of N_{c} is 16.

After determining that the NDPA frame is an EHT NDPA frame, and after receiving the NDP and the trigger frame, the STA performs EHT channel sounding, namely, performs channel estimation based on the NDP. The 802.11be supports channel sounding for 1 to 16 spatial streams. Therefore, the STA may obtain the channel state information of the N_{c} spatial streams.

Specifically, the STA may obtain, based on the resource unit size and the resource unit offset that are indicated by the first station information field, the channel state information of the N_{c} spatial streams at a location of a primary resource unit, or at locations of a plurality of primary resource units, or at locations of a primary resource unit and a secondary resource unit when the resource unit offset indicates that the secondary resource unit is configured. The first station information field indicates that the number of spatial streams for channel sounding is N_{c}.

S106: The STA sends the obtained channel state information of the N_{c} spatial streams to the AP.

Correspondingly, the AP receives the channel state information of the N_{c} spatial streams that is fed back by the STA. Specifically, the STA feeds back a beamforming report to the AP. The beamforming report is a beamforming matrix. The beamforming matrix includes the channel state information of the N_{c} spatial streams. The number of columns of the beamforming matrix is N_{c}.

According to the method for sending/receiving a null data packet announcement frame provided in this embodiment of this application, an EHT NDPA frame structure is provided. A station of an HE version or a later version considers that the NDPA frame is for EHT sounding or HE sounding, and then determines, based on the second indication information in the first bit of the first station information field, that the first station information field corresponds to an EHT station, so that the EHT station can accurately determine the EHT NDPA frame and perform EHT sounding. This avoids that an HE station mistakenly considers that the first station information field corresponds to an HE station. Further, an EHT physical layer protocol data unit (physical layer protocol data unit, PPDU) and a PPDU of another WLAN standard may further form aggregate PPDU (aggregation-PPDU, A-PPDU) transmission. In the A-PPDU mechanism, the HE STA and the EHT STA may simultaneously transmit data on orthogonal resource blocks.

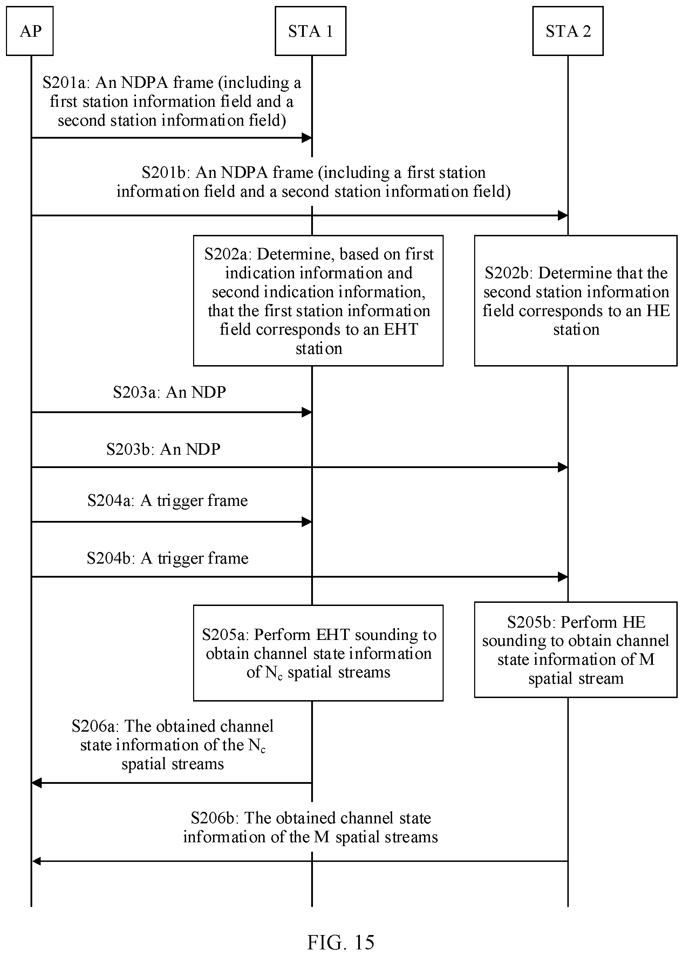

FIG. 15 is a schematic flowchart of a method for sending/receiving a null data packet announcement frame according to an embodiment of this application. For example, the method includes the following steps.

S201a-S201b: An AP sends an NDPA frame.

Different from the embodiment shown in FIG. 11, the NDPA frame includes a first station information field and a second station information field. The first station information field corresponds to an EHT station, and the second station information field corresponds to an HE station. It may be understood that the NDPA frame may include one or more first station information fields and one or more second station information fields. In this way, detection of different types of stations can be supported in one NDPA frame, and no additional NDPA frame needs to be sent. This improves efficiency. For a field structure of the first station information field, refer to the descriptions of the embodiment shown in FIG. 11. A structure of the second station information field is different from that of the first station information field. The structure of the second station information field uses the structure of the station information field in the HE NDPA frame shown in FIG. 5. The second station information field includes an AID, partial bandwidth information, a feedback type and number of grouping, disambiguation, a codebook size, and a number of columns. The second station information field includes four bytes. The partial bandwidth information includes a resource unit start index and a resource unit end index. The resource unit start index belongs to resource units whose index numbers are 0 to 73, the resource unit end index belongs to resource units whose index numbers are 0 to 73, and the resource unit start index is less than or equal to the resource unit end index.

Correspondingly, in S201a, a STA 1 attempts to receive the NDPA frame. When finding that an association identifier included in the first station information field is the same as that of the STA 1, the STA 1 continues to parse the first station information field to obtain other information.

In S201b, a STA 2 attempts to receive the NDPA frame. When finding that an association identifier included in the second station information field is the same as that of the STA 2, the STA 2 continues to parse the second station information field to obtain other information.

S202a: The STA 1 determines, based on first indication information and second indication information, that the first station information field corresponds to an EHT station.

In other words, the STA 1 is an EHT station. For specific implementation of this step, refer to step S102 in the embodiment shown in FIG. 11.

S202b: The STA 2 determines that the second station information field corresponds to an HE station.

In other words, the STA 2 is an HE station. After receiving the NDPA frame sent to the STA 2, the STA 2 determines, based on first indication information included in a sounding dialog token, that the NDPA frame is for EHT sounding or HE sounding. Further, the second station information field is read. If it is determined that a value of the resource unit start index included in the second station information field ranges from 0 to 73, a value of the resource unit end index included in the second station information field ranges from 0 to 73, and the resource unit start index is less than or equal to the resource unit end index, it is determined that the second station information field corresponds to an HE station. For example, the STA 2 determines EHT sounding or HE sounding based on the first indication information, and continues to interpret fields such as a resource unit start index and a resource unit end index based on an HE NDPA frame structure. If the fields can be correctly read (or a read result meets a standard specification), the STA 2 completely interprets the fields based on the structure and performs subsequent processing. If the result does not meet the standard specification, the STA 2 does not continue processing.

S203a-S203b: The AP sends an NDP.

Correspondingly, in S203a, the STA 1 receives the NDP.

In S203b, the STA 2 receives the NDP.

Specifically, the AP broadcasts the NDP, and the STA 1 and the STA 2 receive the NDP.

S204a-S204b: The AP sends a trigger frame.

Correspondingly, in S204a, the STA 1 receives the trigger frame.

In S204b, the STA 2 receives the trigger frame.

In a possible implementation, as shown in FIG. 4, the trigger frame may also trigger the STA 1 and the STA 2 to simultaneously feed back separately obtained channel state information. In another possible implementation, the AP may alternatively send different trigger frames. For example, a first trigger frame is used to trigger the STA 1 to feed back obtained channel state information, and a second trigger frame is used to trigger the STA 2 to feed back obtained channel state information. The AP may determine a time sequence of sending the foregoing different trigger frames. For specific implementation of this step, refer to step S104 in the embodiment shown in FIG. 11.

S205a: The STA 1 performs EHT sounding to obtain channel state information of N_{c} spatial streams.

For specific implementation of this step, refer to step S105 in the embodiment shown in FIG. 11.

S205b: The STA 2 performs HE sounding to obtain channel state information of M spatial streams.

In the 802.11ax standard, a maximum supported bandwidth is 160 MHz, and a maximum number of supported spatial streams is 8. Therefore, a maximum number M of spatial streams indicated by the AP in the second station information field does not exceed 8, where M is a positive integer. The STA obtains the indicated channel state information of the M spatial streams. Specifically, the STA 2 measures the channel state information at a resource unit location indicated by the resource unit start index and the resource unit end index.

S206a-S206b: The STA 1 and the STA 2 simultaneously send the separately obtained channel state information of the N_{c} spatial streams and the separately obtained channel state information of the M spatial streams to the AP based on the indication of the trigger frame.

For specific implementation of step S206a, refer to step S106 in the embodiment shown in FIG. 11.

In step S206b, the STA 2 feeds back the measured channel state information to the AP. Specifically, the STA 2 feeds back a beamforming report to the AP. The beamforming report is a beamforming matrix. The beamforming matrix includes the channel state information of the M spatial streams. The number of columns of the beamforming matrix is M.

If the trigger frame indicates the STA 1 and the STA 2 to simultaneously feed back the channel state information, steps S206a and S206b are simultaneously performed. The STA 1 and the STA 2 may simultaneously transmit the obtained channel state information on orthogonal resource blocks.

According to the method for sending/receiving an NDPA frame provided in this embodiment of this application, the NDPA frame may include the first station information field and the second station information field. The EHT station determines that the first station information field corresponds to an EHT station, and the HE station determines that the second station information field corresponds to an HE station, to separately perform EHT sounding and HE sounding, and then feed back the separately obtained channel state information to the AP. This improves determination accuracy of the NDPA frame and information transmission efficiency.

The foregoing describes the solutions provided in embodiments of this application. It may be understood that, to implement the foregoing functions, a communication apparatus (for example, an AP or a STA) includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is executed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each function, or two or more functions may be integrated into one processing module. The functional module may be implemented in a form of hardware, or may be implemented in a form of a software functional module. It should be noted that, in this embodiment of this application, division into the modules is an example, and is merely logical function division. During actual implementation, another division manner may be used. The following uses division of each functional module based on a corresponding function as an example for description.

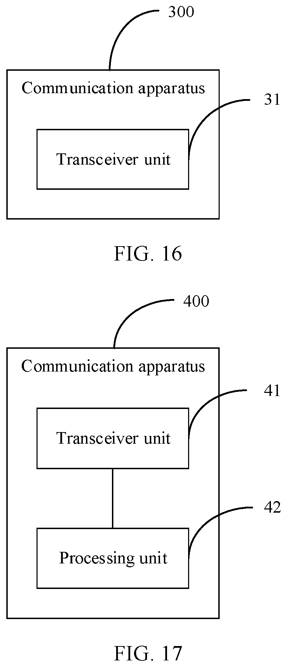

FIG. 16 shows a possible schematic diagram of a structure of a communication apparatus. The communication apparatus 300 includes a transceiver unit 31. The transceiver unit 31 is configured to support the communication apparatus in performing steps S101 and S105 in the embodiment shown in FIG. 11, and may be further configured to support the communication apparatus in performing steps S103 and S104 in the embodiment shown in FIG. 11. Alternatively, the transceiver unit 31 is configured to support the communication apparatus in performing steps S201aS201b, S203a-S204b, and S206a-S206b in the embodiment shown in FIG. 15. For all related content of each step involved in the foregoing method embodiment, refer to function descriptions of a corresponding functional module. Details are not described herein again.

FIG. 17 shows a possible schematic diagram of a structure of a communication apparatus. The communication apparatus 400 includes a transceiver unit 41 and a processing unit 42. The transceiver unit 41 is configured to support the communication apparatus in performing steps S101 and S105 in the embodiment shown in FIG. 11, and may be further configured to support the communication apparatus in performing steps S103 and S104 in the embodiment shown in FIG. 11. The processing unit 42 is configured to support the communication apparatus in performing steps S102 and S104 in the embodiment shown in FIG. 11. Alternatively, the transceiver unit 41 is configured to support the communication apparatus in performing steps S201a/S201b, S203a/S203b, S204a/S204b, and S206a/S206b in the embodiment shown in FIG. 15. The processing unit 42 is configured to support the communication apparatus in performing steps S202a/S202b and S205a/S205b in the embodiment shown in FIG. 15. For all related content of each step involved in the foregoing method embodiment, refer to function descriptions of a corresponding functional module. Details are not described herein again.

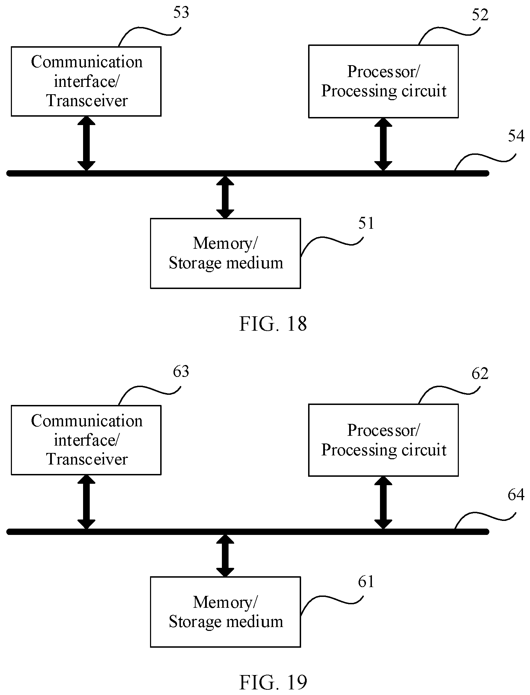

FIG. 18 is a structural diagram of a possible product form of a communication apparatus according to an embodiment of this application.

In a possible product form, the communication apparatus may be an information transmission device. The information transmission device includes a transceiver 53. The transceiver 53 is configured to support the information transmission device in performing steps S101 and S105 in the embodiment shown in FIG. 11, and may be further configured to support the information transmission device in performing steps S103 and S104 in the embodiment shown in FIG. 11. Alternatively, the transceiver 53 is configured to support the information transmission device in performing steps S201a-S201b, S203a-S204b, and S206a-S206b in the embodiment shown in FIG. 15. Optionally, the information transmission device may further include a memory 51 and a processor 52.

In another possible product form, the communication apparatus may be an information transmission board. The information transmission device includes a transceiver 53. The transceiver 53 is configured to support the information transmission board in performing steps S101 and S105 in the embodiment shown in FIG. 11, and may be further configured to support the information transmission board in performing steps S103 and S104 in the embodiment shown in FIG. 11. Alternatively, the transceiver 53 is configured to support the information transmission board in performing steps S201a-S201b, S203a-S204b, and S206a-S206b in the embodiment shown in FIG. 15. Optionally, the information transmission board may further include a memory 51 and a processor 52.

In another possible product form, the communication apparatus is alternatively implemented by a general-purpose processor, namely, a chip. The general-purpose processor includes a processing circuit 52 and a communication interface 53. Optionally, the general-purpose processor may further include a storage medium 51.

In another possible product form, the communication apparatus may alternatively be implemented by using the following: one or more field programmable gate arrays (field programmable gate array, FPGA), a programmable logic device (programmable logic device, PLD), a controller, a state machine, a logic gate, a discrete hardware component, any other suitable circuit, or any combination of circuits that can perform various functions described throughout this application.

The processor 52 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 54 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 18, but this does not mean that there is only one bus or only one type of bus.

FIG. 19 is a structural diagram of a possible product form of a communication apparatus according to an embodiment of this application.

In a possible product form, the communication apparatus may be an information transmission device. The information transmission device includes a processor 62 and a transceiver 63. The processor 62 is configured to control and manage an action of the communication apparatus, for example, configured to support the communication apparatus in performing steps S102 and S104 in the embodiment shown in FIG. 11, or configured to support the communication apparatus in performing steps S202a/S202b and S205a/S205b in the embodiment shown in FIG. 15, and/or configured to perform another technical process described in this specification. The transceiver 63 is configured to support the communication apparatus in performing steps S101 and S105 in the embodiment shown in FIG. 11, and may be further configured to support the communication apparatus in performing steps S103 and S104 in the embodiment shown in FIG. 11. Alternatively, the transceiver 63 is configured to support the communication apparatus in performing steps S201a/S201b, S203a/S203b, S204a/S204b, and S206a/S206b in the embodiment shown in FIG. 15. Optionally, the information transmission device may further include a memory 61.

In another possible product form, the communication apparatus may be an information transmission board. The information transmission board includes a processor 62 and a transceiver 63. The processor 62 is configured to control and manage an action of the communication apparatus, for example, configured to support the communication apparatus in performing steps S102 and S104 in the embodiment shown in FIG. 11, configured to support the communication apparatus in performing steps S202a/S202b and S205a/S205b in the embodiment shown in FIG. 15, and/or configured to perform another technical process described in this specification. The transceiver 63 is configured to support the communication apparatus in performing steps S101 and S105 in the embodiment shown in FIG. 11, and may be further configured to support the communication apparatus in performing steps S103 and S104 in the embodiment shown in FIG. 11, or configured to support the communication apparatus in performing steps S201a/S201b, S203a/S203b, S204a/S204b, and S206a/S206b in the embodiment shown in FIG. 15. Optionally, the information transmission board may further include a memory 61.

In another possible product form, the communication apparatus is alternatively implemented by a general-purpose processor, namely, a chip. The general-purpose processor includes a processing circuit 62 and a communication interface 63. Optionally, the general-purpose processor may further include a storage medium 61.

In another possible product form, the communication apparatus may alternatively be implemented by using the following: one or more FPGAs, a PLD, a controller, a state machine, a logic gate, a discrete hardware component, any other proper circuit, or any combination of circuits that can perform various functions described in this application. The processor 62 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 64 may be a PCI bus, an EISA bus, or the like. The bus may be classified into an address bus, a data bus, a control bus, and the like. For ease of representation, only one bold line is used to represent the bus in FIG. 19, but this does not mean that there is only one bus or only one type of bus.

A person of ordinary skill in the art may understand that all or some of the steps of the method embodiments may be implemented by hardware relevant to program instructions. The program instructions may be stored in a computer-readable storage medium. When the program instructions are run, the steps of the method embodiments are performed. The foregoing storage medium includes any medium that can store program code, such as a USB flash drive, a removable hard disk, a ROM, a RAM, a magnetic disk, or an optical disc.

According to one aspect, an embodiment of this application further provides a readable storage medium. The readable storage medium stores computer-executable instructions. When the computer-executable instructions are run, a device (which may be a single-chip microcomputer, a chip, a controller, or the like) or a processor is enabled to perform the steps in the method for sending/receiving an NDPA frame provided in this application.

According to one aspect, an embodiment of this application further provides a computer program product. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, so that the device performs the steps in the method for sending/receiving an NDPA frame provided in this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objective of the solutions of embodiments.

All or some of the foregoing embodiments may be implemented by using software, hardware, firmware, or any combination thereof. When software is used for implementing embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (solid state drive, SSD).

## Claims

1. A method for sending a null data packet announcement frame, wherein the method comprises:
sending (S101) a null data packet announcement, NDPA, frame, wherein the NDPA frame comprises a sounding dialog token and a first station information field, the sounding dialog token comprises first indication information, the first indication information indicates that the NDPA frame is for extremely high throughput, EHT, sounding or high efficiency, HE, sounding, a first bit of the first station information field comprises second indication information, and the second indication information indicates that the first station information field corresponds to an EHT station or an HE station; and
when the second indication information indicates that the first station information field corresponds to an EHT station, receiving (S106) channel state information of N_{c} spatial streams from the EHT station, wherein N_{c} is a positive integer, and a maximum value of N_{c} is 16.

2. A method for receiving a null data packet announcement frame, wherein the method comprises:
receiving (S101) a null data packet announcement, NDPA, frame, wherein the NDPA frame comprises a sounding dialog token and a first station information field, the sounding dialog token comprises first indication information, the first indication information indicates that the NDPA frame is for extremely high throughput, EHT, sounding or high efficiency, HE, sounding, a first bit of the first station information field comprises second indication information, and the second indication information indicates that the first station information field corresponds to an EHT station or an HE station;
determining (S102), based on the first indication information and the second indication information, that the first station information field corresponds to an EHT station;
performing (S105) EHT sounding to obtain channel state information of N_{c} spatial streams, wherein N_{c} is a positive integer, and a maximum value of N_{c} is 16; and
sending (S106) the obtained channel state information of the N_{c} spatial streams.

3. The method according to claim 1, wherein the first bit corresponds to a most significant bit and a second most significant bit of a resource unit end index in a station information field of the HE station;
the first bit corresponds to a most significant bit and a second most significant bit of a resource unit start index in a station information field of the HE station; or
the first bit corresponds to a most significant bit of a resource unit start index and a most significant bit of a resource unit end index in a station information field of the HE station.

4. The method according to claim 3, wherein the first bit is a 24^{th} bit and a 25^{th} bit of the first station information field;
the first bit is a 17^{th} bit and an 18^{th} bit of the first station information field; or
the first bit is an 18^{th} bit and a 25^{th} bit of the first station information field.

5. The method according to any one of claims 1 to 3, wherein the first station information field further comprises a resource unit size, and the resource unit size indicates a size of any one of the following primary resource units: a 26 RU, a 52 RU, a 106 RU, a 242 RU, a 484 RU, and a 996 RU; and
the first station information field further comprises a resource unit offset, wherein the resource unit offset indicates a frequency domain location of the primary resource unit, and the frequency domain location of the primary resource unit belongs to a first segment or a second segment, or when the primary resource unit comprises a plurality of 996-RUs, the resource unit offset indicates a frequency domain location of each of the plurality of 996-RUs, or the resource unit offset indicates a frequency domain location of the primary resource unit and a configuration of a secondary resource unit combined with the primary resource unit.

6. The method according to any one of claims 1 to 3, wherein the first station information field further comprises a resource unit start index and a resource unit end index, the resource unit start index comprises eight bits, and the resource unit end index comprises eight bits; and
the first station information field further comprises a resource unit offset, wherein the resource unit offset indicates a frequency domain location of the primary resource unit, and the frequency domain location of the primary resource unit belongs to a first segment or a second segment, or when the primary resource unit comprises a plurality of 996-RUs, the resource unit offset indicates a frequency domain location of each of the plurality of 996-RUs, or the resource unit offset indicates a frequency domain location of the primary resource unit and a configuration of a secondary resource unit combined with the primary resource unit.

7. The method according to any one of claims 1 to 3, wherein the first station information field further comprises third indication information, the third indication information indicates a number of the spatial streams, and the third indication information comprises four bits.

8. The method according to any one of claims 1 to 3, wherein the first station information field comprises four bytes or eight bytes.

9. The method according to claim 8, wherein when the first station information field comprises eight bytes, the first station information field comprises a first association identifier AID and a second AID, wherein a value of the second AID is the same as a value of the first AID, or a value of the second AID ranges from 2008 to 2046.

10. The method according to any one of claims 1 to 3, wherein the NDPA frame further comprises a second station information field, and the second station information field corresponds to the HE station; and
the method further comprises:
receiving channel state information of M spatial streams from the HE station, wherein M is a positive integer, and a maximum value of M is 8.

11. The method according to claim 2, wherein the performing EHT sounding to obtain channel state information of N_{c} spatial streams comprises any one of the following operations:
obtaining, at the frequency domain location of the primary resource unit indicated by the resource unit offset, channel state information of the number of spatial streams indicated by the third indication information on a resource unit corresponding to the resource unit size, wherein the frequency domain location of the primary resource unit belongs to the first segment or the second segment;
obtaining, at the frequency domain location of each of the plurality of 996-RUs indicated by the resource unit offset, channel state information of the number of spatial streams indicated by the third indication information on a primary resource unit corresponding to the resource unit size; or
if the resource unit offset indicates that the secondary resource unit is configured for the primary resource unit, obtaining, at the frequency domain location of the primary resource unit indicated by the resource unit offset, channel state information of the number of spatial streams indicated by the third indication information on a primary resource unit corresponding to the resource unit size and the secondary resource unit.

12. The method according to claim 2, wherein the NDPA frame further comprises a second station information field, and the method further comprises:
determining that the second station information field corresponds to the HE station;
performing HE sounding to obtain channel state information of M spatial streams, wherein M is a positive integer, and a maximum value of M is 8; and
sending the obtained channel state information of the M spatial streams.

13. A communication apparatus, wherein the apparatus comprises a module configured to perform the method according to any one of claim 1, and claims 3 to 10 based on the claim 1.

14. A communication apparatus, wherein the apparatus comprises a module configured to perform the method according to any one of claims 2, and claims 3 to 12 based on the claim 2.

## Patentansprüche

1. Verfahren zum Senden eines Nulldatenpaketankündigungsrahmens, wobei das Verfahren umfasst:
Senden (S101) eines Nulldatenpaketankündigungs(NDPA)-Rahmens, wobei der NDPA-Rahmen ein Sounding-Dialog-Token und ein erstes Stationsinformationsfeld umfasst, das Sounding-Dialog-Token erste Angabeinformationen umfasst, die ersten Angabeinformationen angeben, dass der NDPA-Rahmen für Sounding mit extrem hohem Durchsatz (EHT) oder Sounding mit hoher Effizienz (HE) ist, ein erstes Bit des ersten Stationsinformationsfelds zweite Angabeinformationen umfasst und die zweiten Angabeinformationen angeben, dass das erste Stationsinformationsfeld einer EHT-Station oder einer HE-Station entspricht; und
wenn die zweiten Angabeinformationen angeben, dass das erste Stationsinformationsfeld einer EHT-Station entspricht, Empfangen (S106) von Kanalzustandsinformationen von N_{c} räumlichen Strömen von der EHT-Station, wobei N_{c} eine positive ganze Zahl ist und ein maximaler Wert von N_{c} 16 ist.

2. Verfahren zum Empfangen des Nulldatenpaketankündigungsrahmens, wobei das Verfahren umfasst:
Empfangen (S101) eines Nulldatenpaketankündigungs(NDPA)-Rahmens, wobei der NDPA-Rahmen ein Sounding-Dialog-Token und ein erstes Stationsinformationsfeld umfasst, das Sounding-Dialog-Token erste Angabeinformationen umfasst, die ersten Angabeinformationen angeben, dass der NDPA-Rahmen für Sounding mit extrem hohem Durchsatz (EHT) oder Sounding mit hoher Effizienz (HE) ist, ein erstes Bit des ersten Stationsinformationsfelds zweite Angabeinformationen umfasst und die zweiten Angabeinformationen angeben, dass das erste Stationsinformationsfeld einer EHT-Station oder einer HE-Station entspricht;
Bestimmen (S102), basierend auf den ersten Angabeinformationen und den zweiten Angabeinformationen, dass das erste Stationsinformationsfeld einer EHT-Station entspricht;
Durchführen (S105) von EHT-Sounding, um Kanalzustandsinformationen von N_{c} räumlichen Strömen zu erhalten, wobei N_{c} eine positive ganze Zahl ist und ein maximaler Wert von N_{c} 16 ist; und
Senden (S106) der erhaltenen Kanalzustandsinformationen der N_{c} räumlichen Ströme.

3. Verfahren nach Anspruch 1, wobei das erste Bit einem höchstwertigen Bit und einem zweithöchstwertigen Bit eines Ressourceneinheitsindex in einem Stationsinformationsfeld der HE-Station entspricht;
das erste Bit einem höchstwertigen Bit und einem zweithöchstwertigen Bit eines Ressourceneinheitsstartindex in einem Stationsinformationsfeld der HE-Station entspricht; oder
das erste Bit einem höchstwertigen Bit eines Ressourceneinheitsstartindex und einem höchstwertigen Bit eines Ressourceneinheitsindex in einem Stationsinformationsfeld der HE-Station entspricht.

4. Verfahren nach Anspruch 3, wobei das erste Bit ein 24. Bit und ein 25. Bit des ersten Stationsinformationsfelds ist;
das erste Bit ein 17. Bit und ein 18. Bit des ersten Stationsinformationsfelds ist; oder das erste Bit ein 18. Bit und ein 25. Bit des ersten Stationsinformationsfelds ist.

5. Verfahren nach einem der Ansprüche 1 bis 3, wobei das erste Stationsinformationsfeld ferner eine Ressourceneinheitsgröße umfasst und die Ressourceneinheitsgröße eine Größe einer beliebigen der folgenden primären Ressourceneinheiten angibt: einer 26-RU, einer 52-RU, einer 106-RU, einer 242-RU, einer 484-RU und einer 996-RU; und das erste Stationsinformationsfeld ferner einen Ressourceneinheitsversatz umfasst, wobei der Ressourceneinheitsversatz eine Frequenzbereichsposition der primären Ressourceneinheit angibt, und die Frequenzbereichsposition der primären Ressourceneinheit zu einem ersten Segment oder einem zweiten Segment gehört, oder wenn die primäre Ressourceneinheit eine Vielzahl von 996-RUs umfasst, der Ressourceneinheitsversatz eine Frequenzbereichsposition jeder der Vielzahl von 996-RUs angibt, oder der Ressourceneinheitsversatz eine Frequenzbereichsposition der primären Ressourceneinheit und eine Konfiguration einer sekundären Ressourceneinheit, die mit der primären Ressourceneinheit kombiniert ist, angibt.

6. Verfahren nach einem der Ansprüche 1 bis 3, wobei das erste Stationsinformationsfeld ferner einen Ressourceneinheitsstartindex und einen Ressourceneinheitsindex umfasst, der Ressourceneinheitsstartindex acht Bits umfasst und der Ressourceneinheitsindex acht Bits umfasst; und
das erste Stationsinformationsfeld ferner einen Ressourceneinheitsversatz umfasst, wobei der Ressourceneinheitsversatz eine Frequenzbereichsposition der primären Ressourceneinheit angibt, und die Frequenzbereichsposition der primären Ressourceneinheit zu einem ersten Segment oder einem zweiten Segment gehört, oder wenn die primäre Ressourceneinheit eine Vielzahl von 996-RUs umfasst, der Ressourceneinheitsversatz eine Frequenzbereichsposition jeder der Vielzahl von 996-RUs angibt, oder der Ressourceneinheitsversatz eine Frequenzbereichsposition der primären Ressourceneinheit und eine Konfiguration einer sekundären Ressourceneinheit, die mit der primären Ressourceneinheit kombiniert ist, angibt.

7. Verfahren nach einem der Ansprüche 1 bis 3, wobei das erste Stationsinformationsfeld ferner dritte Angabeinformationen umfasst, die dritten Angabeinformationen eine Anzahl der räumlichen Ströme angeben und die dritten Angabeinformationen vier Bits umfassen.

8. Verfahren nach einem der Ansprüche 1 bis 3, wobei das erste Stationsinformationsfeld vier Bytes oder acht Bytes umfasst.

9. Verfahren nach Anspruch 8, wobei, wenn das erste Stationsinformationsfeld acht Bytes umfasst, das erste Stationsinformationsfeld einen ersten Assoziationsidentifikator AID und einen zweiten AID umfasst, wobei ein Wert des zweiten AID gleich einem Wert des ersten AID ist oder ein Wert des zweiten AID im Bereich von 2008 bis 2046 liegt.

10. Verfahren nach einem der Ansprüche 1 bis 3, wobei der NDPA-Rahmen ferner ein zweites Stationsinformationsfeld umfasst und das zweite Stationsinformationsfeld der HE-Station entspricht; und
wobei das Verfahren ferner umfasst:
Empfangen von Kanalzustandsinformationen von M räumlichen Strömen von der HE-Station, wobei M eine positive ganze Zahl ist und ein maximaler Wert von M 8 ist.

11. Verfahren nach Anspruch 2, wobei das Durchführen von EHT-Sounding, um Kanalzustandsinformationen von N_{c} räumlichen Strömen zu erhalten, ein beliebiges der Folgenden umfasst:
Erhalten, an der Frequenzbereichsposition der primären Ressourceneinheit, die durch den Ressourceneinheitsversatz angegeben wird, von Kanalzustandsinformationen der Anzahl von räumlichen Strömen, die durch die dritten Angabeinformationen angegeben werden, auf einer der Ressourceneinheitsgröße entsprechenden Ressourceneinheit, wobei die Frequenzbereichsposition der primären Ressourceneinheit zu dem ersten Segment oder dem zweiten Segment gehört;
Erhalten, an der Frequenzbereichsposition jeder der Vielzahl von 996-Ressourceneinheiten, die durch den Ressourceneinheitsversatz angegeben werden, von Kanalzustandsinformationen der Anzahl von räumlichen Strömen, die durch die dritten Angabeinformationen angegeben werden, auf einer primären Ressourceneinheit, die der Ressourceneinheitsgröße entspricht; oder
wenn der Ressourceneinheitsversatz angibt, dass die sekundäre Ressourceneinheit für die primäre Ressourceneinheit konfiguriert ist, Erhalten, an der Frequenzbereichsposition der primären Ressourceneinheit, die durch den Ressourceneinheitsversatz angegeben wird, von Kanalzustandsinformationen der Anzahl von räumlichen Strömen, die durch die dritten Angabeinformationen angegeben werden, auf einer primären Ressourceneinheit, die der Ressourceneinheitsgröße entspricht, und der sekundären Ressourceneinheit.

12. Verfahren nach Anspruch 2, wobei der NDPA-Rahmen ferner ein zweites Stationsinformationsfeld umfasst und das Verfahren ferner umfasst:
Bestimmen, dass das zweite Stationsinformationsfeld der HE-Station entspricht; Durchführen von HE-Sounding, um Kanalzustandsinformationen von M räumlichen Strömen zu erhalten, wobei M eine positive ganze Zahl ist und ein maximaler Wert von M 8 ist; und
Senden der erhaltenen Kanalzustandsinformationen der M räumlichen Ströme.

13. Kommunikationseinrichtung, wobei die Einrichtung ein Modul umfasst, das konfiguriert ist, um das Verfahren nach einem von Anspruch 1 und den Ansprüchen 3 bis 10 basierend auf Anspruch 1 durchzuführen.

14. Kommunikationseinrichtung, wobei die Einrichtung ein Modul umfasst, das konfiguriert ist, um das Verfahren nach einem der Ansprüche 2 und der Ansprüche 3 bis 12 basierend auf Anspruch 2 durchzuführen.

## Revendications

1. Procédé d'envoi d'une trame d'annonce de paquet de données nulles, dans lequel le procédé comprend :
l'envoi (S101) d'une trame d'annonce de paquet de données nulles, NDPA, dans lequel la trame NDPA comprend un jeton de dialogue de sondage et un premier champ d'informations de station, le jeton de dialogue de sondage comprend de premières informations d'indication, les premières informations d'indication indiquent que la trame NDPA est destinée à un sondage à débit extrêmement élevé, EHT, ou à un sondage à haut rendement, HE, un premier bit du premier champ d'informations de station comprend de deuxièmes informations d'indication, et les deuxièmes informations d'indication indiquent que le premier champ d'informations de station correspond à une station EHT ou à une station HE ; et
lorsque les deuxièmes informations d'indication indiquent que le premier champ d'informations de station correspond à une station EHT, la réception (S106) d'informations d'état de canal de N_{c} flux spatiaux en provenance de la station EHT, dans lequel N_{c} est un nombre entier positif et une valeur maximale de N_{c} est 16.

2. Procédé de réception d'une trame d'annonce de paquet de données nulles, dans lequel le procédé comprend :
la réception (S101) d'une trame d'annonce de paquet de données nulles, NDPA, dans lequel la trame NDPA comprend un jeton de dialogue de sondage et un premier champ d'informations de station, le jeton de dialogue de sondage comprend de premières informations d'indication, les premières informations d'indication indiquent que la trame NDPA est destinée à un sondage à débit extrêmement élevé, EHT, ou à un sondage à haut rendement, HE, un premier bit du premier champ d'informations de station comprend de deuxièmes informations d'indication, et les deuxièmes informations d'indication indiquent que le premier champ d'informations de station correspond à une station EHT ou à une station HE ;
le fait de déterminer (S102), sur la base des premières informations d'indication et des deuxièmes informations d'indication, que le premier champ d'informations de station correspond à une station EHT ;
la réalisation (S105) d'un sondage EHT pour obtenir des informations d'état de canal de N_{c} flux spatiaux, dans lequel N_{c} est un nombre entier positif, et une valeur maximale de N_{c} est 16 ; et
l'envoi (S106) des informations d'état de canal obtenues des N_{c} flux spatiaux.

3. Procédé selon la revendication 1, dans lequel le premier bit correspond à un bit le plus significatif et à un second bit le plus significatif d'un indice de fin d'unité de ressource dans un champ d'informations de station de la station HE ;
le premier bit correspond à un bit le plus significatif et à un second bit le plus significatif d'un indice de début d'unité de ressource dans un champ d'informations de station de la station HE ; ou
le premier bit correspond à un bit le plus significatif d'un indice de début d'unité de ressource et à un bit le plus significatif d'un indice de fin d'unité de ressource dans un champ d'informations de station de la station HE.

4. Procédé selon la revendication 3, dans lequel le premier bit est un 24^{e} bit et un 25^{e} bit du premier champ d'informations de station ;
le premier bit est un 17^{e} bit et un 18^{e} bit du premier champ d'informations de station ; ou
le premier bit est un 18^{e} bit et un 25^{e} bit du premier champ d'informations de station.

5. Procédé selon l'une quelconque des revendications 1 à 3, dans lequel le premier champ d'informations de station comprend en outre une taille d'unité de ressource, et la taille d'unité de ressource indique une taille de l'une quelconque des unités de ressource primaires suivantes : une 26 RU, une 52 RU, une 106 RU, une 242 RU, une 484 RU et une 996 RU ; et
le premier champ d'informations de station comprend en outre un décalage d'unité de ressource, dans lequel le décalage d'unité de ressource indique un emplacement de domaine fréquentiel de l'unité de ressource primaire, et l'emplacement de domaine fréquentiel de l'unité de ressource primaire appartient à un premier segment ou à un second segment, ou lorsque l'unité de ressource primaire comprend une pluralité de 996-RU, le décalage d'unité de ressource indique un emplacement de domaine fréquentiel de chacune de la pluralité de 996-RU, ou le décalage d'unité de ressource indique un emplacement de domaine fréquentiel de l'unité de ressource primaire et une configuration d'une unité de ressource secondaire combinée à l'unité de ressource primaire.

6. Procédé selon l'une quelconque des revendications 1 à 3, dans lequel le premier champ d'informations de station comprend en outre un indice de début d'unité de ressource et un indice de fin d'unité de ressource, l'indice de début d'unité de ressource comprend huit bits, et l'indice de fin d'unité de ressource comprend huit bits ; et
le premier champ d'informations de station comprend en outre un décalage d'unité de ressource, dans lequel le décalage d'unité de ressource indique un emplacement de domaine fréquentiel de l'unité de ressource primaire, et l'emplacement de domaine fréquentiel de l'unité de ressource primaire appartient à un premier segment ou à un second segment, ou lorsque l'unité de ressource primaire comprend une pluralité de 996-RU, le décalage d'unité de ressource indique un emplacement de domaine fréquentiel de chacune de la pluralité de 996-RU, ou le décalage d'unité de ressource indique un emplacement de domaine fréquentiel de l'unité de ressource primaire et une configuration d'une unité de ressource secondaire combinée à l'unité de ressource primaire.

7. Procédé selon l'une quelconque des revendications 1 à 3, dans lequel le premier champ d'informations de station comprend en outre de troisièmes informations d'indication, les troisièmes informations d'indication indiquent un nombre des flux spatiaux, et les troisièmes informations d'indication comprennent quatre bits.

8. Procédé selon l'une quelconque des revendications 1 à 3, dans lequel le premier champ d'informations de station comprend quatre octets ou huit octets.

9. Procédé selon la revendication 8, dans lequel, lorsque le premier champ d'informations de station comprend huit octets, le premier champ d'informations de station comprend un premier identifiant d'association, AID, et un second AID, dans lequel une valeur du second AID est la même qu'une valeur du premier AID, ou une valeur du second AID se situe dans la plage allant de 2008 à 2046.

10. Procédé selon l'une quelconque des revendications 1 à 3, dans lequel la trame NDPA comprend en outre un second champ d'informations de station, et le second champ d'informations de station correspond à la station HE ; et
le procédé comprend en outre :
la réception d'informations d'état de canal de M flux spatiaux en provenance de la station HE, dans lequel M est un nombre entier positif et une valeur maximale de M est 8.

11. Procédé selon la revendication 2, dans lequel la réalisation d'un sondage EHT pour obtenir des informations d'état de canal de N_{c} flux spatiaux comprend l'une quelconque des opérations suivantes :
l'obtention, au niveau de l'emplacement de domaine fréquentiel de l'unité de ressource primaire indiqué par le décalage d'unité de ressource, d'informations d'état de canal du nombre de flux spatiaux indiqué par les troisièmes informations d'indication sur une unité de ressource correspondant à la taille d'unité de ressource, dans lequel l'emplacement de domaine fréquentiel de l'unité de ressource primaire appartient au premier segment ou au second segment ;
l'obtention, au niveau de l'emplacement de domaine fréquentiel de chacune de la pluralité de 996-RU indiqué par le décalage d'unité de ressource, d'informations d'état de canal du nombre de flux spatiaux indiqué par les troisièmes informations d'indication sur une unité de ressource primaire correspondant à la taille d'unité de ressource ; ou
si le décalage d'unité de ressource indique que l'unité de ressource secondaire est configurée pour l'unité de ressource primaire, l'obtention, au niveau de l'emplacement de domaine fréquentiel de l'unité de ressource primaire indiqué par le décalage d'unité de ressource, d'informations d'état de canal du nombre de flux spatiaux indiqué par les troisièmes informations d'indication sur une unité de ressource primaire correspondant à la taille d'unité de ressource et à l'unité de ressource secondaire.

12. Procédé selon la revendication 2, dans lequel la trame NDPA comprend en outre un second champ d'informations de station, et le procédé comprend en outre :
le fait de déterminer que le second champ d'informations de station correspond à la station HE ;
la réalisation d'un sondage HE pour obtenir des informations d'état de canal de M flux spatiaux, dans lequel M est un nombre entier positif et la valeur maximale de M est 8 ; et
l'envoi des informations d'état de canal obtenues des M flux spatiaux.

13. Appareil de communication, dans lequel l'appareil comprend un module configuré pour réaliser le procédé selon l'une quelconque de la revendication 1, et des revendications 3 à 10 basées sur la revendication 1.

14. Appareil de communication, dans lequel l'appareil comprend un module configuré pour réaliser le procédé selon l'une quelconque des revendications 2, et des revendications 3 à 12 basées sur la revendication 2.
